# EUROPÄISCHE PATENTSCHRIFT

(11) **EP 3 978 827 B1**
(45) Veröffentlichungstag und Bekanntmachung des Hinweises auf die Patenterteilung: **04.06.2025**
(21) Anmeldenummer: 20199811.9
(22) Anmeldetag: 02.10.2020
(51) Int. Cl.: F24S 25/70

(54) **VORRICHTUNG ZUM STÜTZEN VON SOLARMODULEN, BAUSATZ, VERFAHREN ZUR HERSTELLUNG UND SOLARMODUL-ANORDNUNG**
DEVICE FOR SUPPORTING SOLAR MODULES, KIT, MANUFACTURING METHOD AND SOLAR MODULE ASSEMBLY
DISPOSITIF DE SUPPORT DES MODULES SOLAIRES, ENSEMBLE, PROCÉDÉ DE FABRICATION ET AGENCEMENT DE MODULE SOLAIRE

(43) Veröffentlichungstag der Anmeldung: 06.04.2022
(73) Patentinhaber: Mounting Systems GmbH, 15834 Rangsdorf (DE)
(72) Erfinder: VACA RICO, Txaber, 48940 Leioa (ES); PHILIPPI, Carsten, 14974 Ludwigsfelde (DE)
(74) Vertreter: Bittner, Thomas L.

(56) Entgegenhaltungen:
- EP-A1- 3 300 248
- DE-A1- 102009 002 504
- DE-A1- 102012 208 107
- JP-A- 2012 097 505
- JP-A- 2012 202 030
- US-A- 4 421 943
- US-A1- 2013 037 081

## Beschreibung

Die Erfindung betrifft eine Vorrichtung zum Stützen von Solarmodulen, einen Bausatz und ein Verfahren zu dessen Herstellung sowie eine Solarmodul-Anordnung.

### Hintergrund

Solarmodule, insbesondere Photovoltaikmodule und Solarthermie-Kollektoren, können freistehend oder auf Dächern angeordnet werden. Hierbei gibt bei Schrägdächern das Dach die Ausrichtung der Solarmodule an. Bei der Montage auf einem Flachdach sowie bei einer freistehenden Montage lassen sich sowohl die Ausrichtung nach Himmelsrichtungen als auch die Winkelstellung gegenüber der Horizontalen an die Gegebenheiten anpassen, insbesondere die baulichen Rahmenbedingungen, den gemäß der geographischen Lage zu erwartenden Sonnenstand sowie eine mögliche Abschattung durch Objekte in der Umgebung. Hierbei sind sowohl Anordnungen bekannt, bei denen die Solarmodule Richtung Süden ausgerichtet sind, als auch solche Anordnungen, bei denen ein Teil der Solarmodule nach Osten und ein anderer Teil der Solarmodule nach Westen ausgerichtet sind. Je nach Ausrichtung und geographischer Lage sind Winkel gegenüber der Horizontalen zwischen 10° und 18° üblich, wobei auch größere oder kleinere Winkel realisiert sein können.

Für das Einstellen eines Winkels sind Montagesysteme aus Kunststoff mit einer wannenartigen Grundform bekannt, wobei die Form nach unten oder oben offen sein kann. Ausformungen des jeweiligen Systems bilden schräge Auflageflächen, die einen Neigungswinkel eines zu montierenden Solarmoduls definieren. Ein derartiges System ist beispielsweise aus dem Dokument DE 10 2006 042 092 A1 bekannt. Das Dokument WO 2012 / 156038 A1 offenbart ebenfalls eine solche Trägereinheit.

Gemäß einem anderen Ansatz werden Rahmenkonstruktionen gebildet, die jeweils eine Seite eines Solarmoduls stützen. Hierbei ist ein Ende eines die Schrägstellung definierenden Halteprofils an einem Grundprofil befestigt und erstreckt sich von diesem unter einem Winkel nach oben. Der Winkel wird durch ein Stützprofil aufgespannt, welches sich von dem Grundprofil nach oben zum Halteprofil erstreckt und mit diesem verbunden ist. Somit ist ein Rahmen in Form eines Dreiecks gebildet.

Alternativ können Solarmodule auf Stützen in Form von Füßen montiert werden, wobei die Füße freistehend oder auf Grundschienen fixiert sind. Hierbei ist das Solarmodul an zwei oberen Füßen befestigt, welche auf gegenüberliegenden Seiten ein höheres hinteres Ende des Solarmoduls stützen. Von diesen oberen Stützen erstreckt sich das Solarmodul schräg nach unten und ist an einem niedrigeren vorderen Ende an der Grundschiene befestigt, insbesondere mittels zwei unterer Füße oder Stützen, welche das vordere Ende des Solarmoduls auf gegenüberliegenden Seiten stützen. Im Gegensatz zu einer entlang des gesamten Solarmoduls verlaufenden streckenmäßigen Stützung auf schrägen Auflageflächen bzw. - streben, ist mit den kleinen Befestigungsflächen bei derartigen Systemen eine quasipunktförmige Lagerung realisiert. Der Winkel des Solarmoduls zur Horizontalen wird hierbei durch den Höhenunterschied und den Abstand zwischen den vorderen (unteren) und den hinteren (oberen) Stützflächen bestimmt.

Derartige Systeme mit vorderen und hinteren Füßen sind beispielsweise in den Dokumenten WO 2015 / 069112 A1, WO 2015 / 110254 A1 und WO 2019 / 143701 A1 beschrieben. Das Dokument WO 2015 / 069112 A1 offenbart ein System, bei dem Stützen mit gebogenen Profilen gebildet sind.

Füße können als mit einem Grundprofil verbundene ausklappbare Profile gebildet sein. Um innerhalb eines modularen Systems unterschiedliche Winkelausrichtungen zur Horizontalen von Solarmodulen zu erreichen, können Füße aus mehreren Segmenten bestehen, welche ausgewählt und miteinander verbunden werden, um einen Fuß mit einer gewünschten Höhe zu bilden.

Das Dokument EP 3 300 248 A1 beschreibt Halterung für ein Solarpanel umfassend einen geneigten Stützrahmen mit einem Paar horizontaler Elemente, die sich entlang einer horizontalen Richtung parallel mit unterschiedlichen Höhen erstrecken, und einem Paar geneigter Elemente, die zwischen den horizontalen Elementen angeordnet sind und sich parallel erstrecken, um auf einer Seite geneigt zu werden, ein feststehendes Stützelement, das den geneigten Stützrahmen auf einer Installationsfläche fixiert und stützt, ein quadratisches Plattenstützelement, auf dem ein Solarpanel befestigt ist, eine Stützachse, die so vorgesehen ist, dass sie sich zwischen dem geneigten Stützrahmen und dem Plattenstützelement erstreckt und die das Plattenstützelement stützt, um sich zu drehen, und ein Paar Stopperelemente, die jeweils an beiden rotierenden Endseiten des Plattenstützelement vorgesehen sind, so dass sich die einen Endabschnitte frei drehen, und die eingreifende konkave Abschnitte aufweisen, die mit Halbumfängen von Außenumfängen der horizontalen Elemente aus einer Drehrichtung in Eingriff stehen, um an Positionen entfernt zu werden, die einer vorbestimmten Neigungswinkelposition des Plattenstützelements entsprechen.

In dem Dokument JP 2012-202030 A ist ein Rahmen für ein Solarzellenmodul offenbart, das ein erstes Stützelement und ein zweites Stützelement aufweist, die das Solarzellenmodul auf einer Installationsoberfläche stützen. Das erste Stützelement stützt das Solarzellenmodul schwenkbar relativ zu der Installationsoberfläche. Das zweite Stützelement hat ein oberes Ende, das mit dem oberen Ende des Solarzellenmoduls verbunden ist, und ein unteres Ende, das mit der Installationsoberfläche verbunden ist. Das zweite Stützelement beinhaltet Längenanpassungmittel, welche es erlauben, die Länge mittels eines Schraubschafts anzupassen, so dass der Neigungswinkel des Solarzellenmoduls relativ zu der Installationsoberfläche geändert wird.

Das Dokument DE 10 2012 208 107 A1 betrifft eine Vorrichtung zur Überdachung von Fahrzeugstell- bzw. -parkplätzen, bestehend aus einem auf Stützen ruhenden Dachtragwerk aus mindestens zwei Längsträgern und die Längsträger miteinander verbindenden Querprofilen, wobei die Längsträger und/oder die Querprofile zur Auflage und Befestigung der Dacheindeckung des Dachtragwerks vorgesehen sind, wobei die unteren Enden der Stützen jeder Seite der Vorrichtung jeweils mit einer längsverlaufenden Schiene verbunden sind, mit denen die Vorrichtung auf den jeweiligen Boden aufstellbar ist, und wobei im unteren Bereich der Vorrichtung oberhalb der Schienen Beschwerungselemente vorgesehen sind.

Aus dem Dokument US 4,421,943 A ist eine Vorrichtung zum Sammeln von Sonnenenergie und deren Umwandlung in elektrische Energie unter Verwendung von Sonnenkollektoren bekannt, die schwenkbar an einer Basis montiert sind, so dass die Platten in eine Speicherposition innerhalb der Basis geschwenkt werden können. Zusätzliche Solarpaneele können schwenkbar auf einziehbaren Rahmenträgern montiert sein, die sich im Inneren der Basis verstauen, wenn die Paneele in eine horizontale Position geschwenkt werden

Das Dokument JP 2012-097505 A beschreibt eine Dachstruktur eines Gebäudes mit einem zur Belüftung zu öffnenden Dachfenster, bei dem eine effektive Nutzung des gesamten Dachs ermöglicht sein soll.

Das Dokument DE 10 2009 002 504 A1 beschreibt einen Träger eines Solarkollektormoduls, der ein auf eine Unterlage aufsetzbares Basiselement, ein mit dem Basiselement schwenkbar verbundenes Aufnahmeelement für das Solarkollektormodul und Mittel zum Einstellen des Winkels zwischen dem Basiselement und dem Aufnahmeelement umfasst. Die Mittel zum Einstellen des Winkels zwischen dem Basiselement und dem Aufnahmeelement umfassen zumindest zwei einander scherenförmig kreuzende Schenkel nach Art eines Scherenhubgestänges, die das Aufnahmeelement an dem Basiselement abstützen.

In dem Dokument US 2013 / 037081 A1 ist ein Solartracker beschrieben, der aus einer Basis und einem Solarpanel mit ersten und zweiten gegenüberliegenden Enden besteht. Das erste Ende kann durch eine erste Welle mit der Basis verbunden werden und das zweite Ende kann durch eine zweite Welle mit der Basis verbunden werden, so dass das Solarpanel unter dem Antrieb eines Hebemechanismus in Bezug auf die Basis abwechselnd um die erste Welle und um die zweite Welle schwenken kann. Eine automatische Verbindungs-/Trennvorrichtung verbindet das zweite Ende des Solarpanels mit der Basis und trennt gleichzeitig das erste Ende des Solarpanels von der Basis und umgekehrt, und zwar jedes Mal, wenn das Solarpanel eine Position parallel zur Basis erreicht, um die Neigung des Solarpanels in Bezug auf die Basis umzukehren.

Gemäß einem Aspekt der Erfindung ist eine Vorrichtung nach Anspruch 1 zum Stützen von Solarmodulen geschaffen. Die Vorrichtung weist eine Grundschiene und eine an der Grundschiene angeordnete obere Stütze für das Halten eines oberen Endes eines Solarmoduls auf, welche ein erstes Stützenelement und ein zweites Stützenelement aufweist. Das erste Stützenelement und das zweite Stützenelement sind beweglich miteinander verbunden, derart, dass das erste Stützenelement relativ zu dem zweiten Stützenelement zwischen einer ersten Stellung und einer zweiten Stellung beweglich ist. Wenn das erste Stützenelement in der ersten Stellung angeordnet ist, erstreckt sich die obere Stütze bis zu einer ersten Höhe über der Grundschiene. Wenn das erste Stützenelement in der zweiten Stellung angeordnet ist, erstreckt sich die obere Stütze bis zu einer zweiten Höhe über der Grundschiene, die von der ersten Höhe verschieden ist.

Eine Höhe der oberen Stütze über der Grundschiene kann insbesondere definiert sein durch einen Abstand von einer Oberseite der Grundschiene bis zu einem obersten Punkt der oberen Stütze über der Oberseite der Grundschiene, wobei die Oberseite der Grundschiene und der oberste Punkt der oberen Stütze im Hinblick auf eine horizontale Ausrichtung der Grundschiene auf oder über einem Untergrund der Vorrichtung definiert ist, also beispielsweise einem Boden oder einem Flachdach. Das obere Ende des Solarmoduls kann bei einem unter einem Winkel zur Horizontalen angeordneten Solarmodul durch die obersten Kante der Solarmoduls definiert sein, wobei die oberste Kante des Solarmoduls im Hinblick auf eine horizontale Ausrichtung der Grundschiene auf oder über einem Untergrund der Vorrichtung definiert ist.

Die Grundschiene kann mit einer Profilschiene gebildet sein. Insbesondere kann die Grundschiene mit einem abgelängten, beispielsweise abgeschnittenen oder abgescherten, Abschnitt eines Metall- oder Kunststoffprofils gebildet sein, insbesondere eines Hohlprofils.

Gemäß einem weiteren Aspekt der Erfindung ist ein Bausatz nach Anspruch 12 für eine offenbarungsgemäße Vorrichtung mit einer Grundschiene und einer oberen Stütze für das Halten eines oberen Endes eines Solarmoduls bereitgestellt. Die obere Stütze weist ein erstes Stützenelement und ein zweites Stützenelement auf, wobei das erste Stützenelement und das zweite Stützenelement beweglich miteinander verbunden sind, derart, dass das erste Stützenelement relativ zu dem zweiten Stützenelement zwischen einer ersten Stellung und einer zweiten Stellung beweglich ist. Die obere Stütze ist eingerichtet, für das Herstellen einer Vorrichtung zum Stützen von Solarmodulen an der Grundschiene angeordnet zu werden. Das erste Stützenelement ist eingerichtet, hierbei in der ersten Stellung angeordnet zu werden, derart, dass sich das obere Stützelement bis zu einer ersten Höhe über der Grundschiene erstreckt, und in der zweiten Stellung angeordnet zu werden, derart, dass sich das obere Stützelement bis zu einer zweiten Höhe über der Grundschiene erstreckt, die von der ersten Höhe verschieden ist.

Gemäß einem weiteren Aspekt der Erfindung ist ein Verfahren nach Anspruch 13 zum Herstellen einer Vorrichtung zum Stützen von Solarmodulen bereitgestellt. Das Verfahren umfasst die Schritte des Bereitstellens einer Grundschiene, des Bereitstellens einer oberen Stütze für das Halten eines oberen Endes eines Solarmoduls und des Anordnens der oberen Stütze an der Grundschiene. Die obere Stütze weist ein erstes Stützenelement und ein zweites Stützenelement auf, wobei das erste Stützenelement und das zweite Stützenelement beweglich miteinander verbunden sind, derart, dass das erste Stützenelement relativ zu dem zweiten Stützenelement zwischen einer ersten Stellung und einer zweiten Stellung beweglich ist. Das erste Stützenelement wird in der ersten Stellung angeordnet, derart, dass sich die obere Stütze bis zu einer ersten Höhe über der Grundschiene erstreckt, oder das erste Stützenelement wird in der zweiten Stellung angeordnet, derart, dass sich die obere Stütze bis zu einer zweiten Höhe über der Grundschiene erstreckt, die von der ersten Höhe verschieden ist.

Nach noch einem weiteren Aspekt ist eine Solarmodul-Anordnung mit einer Stützvorrichtung und einem Solarmodul geschaffen. Die Stützvorrichtung weist eine Grundschiene und eine an der Grundschiene angeordnete obere Stütze für das Halten eines oberen Endes eines Solarmoduls auf. Die obere Stütze weist ein erstes Stützenelement und ein zweites Stützenelement auf, wobei das erste Stützenelement und das zweite Stützenelement beweglich miteinander verbunden sind, derart, dass das erste Stützenelement relativ zu dem zweiten Stützenelement zwischen einer ersten Stellung und einer zweiten Stellung beweglich ist. Das Solarmodul ist auf der Stützvorrichtung angeordnet, wobei ein oberes Ende des Solarmoduls von der oberen Stütze gestützt wird. Das erste Stützenelement der Stützvorrichtung ist in der ersten Stellung angeordnet, wobei das erste Stützenelement in der ersten Stellung gegenüber der Grundschiene der Stützvorrichtung derart angeordnet ist, dass das Solarmodul gegenüber der Grundschiene in einem ersten Neigungswinkel angeordnet ist, oder das erste Stützenelement der Stützvorrichtung ist in der zweiten Stellung angeordnet, wobei das erste Stützenelement in der zweiten Stellung gegenüber der Grundschiene der Stützvorrichtung derart angeordnet ist, dass das Solarmodul gegenüber der Grundschiene in einem zweiten Neigungswinkel angeordnet ist, der von dem ersten Neigungswinkel verschieden ist.

Bei der Solarmodul-Anordnung kann ein von dem ersten Neigungswinkel unterschiedlicher zweiter Neigungswinkel beispielsweise dadurch erreicht werden, dass sich ein Abstand eines Verbindungspunkts der oberen Stütze mit dem Solarmodul zu einem unteren Ende des Solarmoduls zwischen einer Anordnung des ersten Stützenelements in der ersten Stellung und einer Anordnung des ersten Stützenelements in der zweiten Stellung unterscheidet und / oder dadurch, dass sich eine Höhe der oberen Stütze über der Grundschiene zwischen einer Anordnung des ersten Stützenelements in der ersten Stellung und einer Anordnung des ersten Stützenelements in der zweiten Stellung unterscheidet.

Bei einem Solarmodul im Sinne der Offenbarung kann es sich insbesondere um ein Photovoltaikmodul oder ein Solarthermie-Kollektor handeln.

Mit den Stützenelementen der Vorrichtung können Stützstrukturen zur Stützung eines Solarmoduls gebildet sein. Insbesondere können die Stützenelemente als Gussteile, beispielsweise aus Metallguss, vorzugsweise Aluminiumguss, gebildet sein. Alternativ können die Stützenelemente mit abgelängten Profilen gebildet sein. In diesem Fall können die Stützenelemente nachbearbeitet sein, insbesondere durch Entgraten.

Die Grundschiene kann eine erste Aufnahmeöffnung und eine zweite Aufnahmeöffnung aufweisen und die obere Stütze kann ein an dem ersten Stützenelement angeordnetes erstes Verbindungselement und ein an dem zweiten Stützenelement angeordnetes zweites Verbindungselement aufweisen. Hierbei kann das erste Verbindungselement in der ersten Stellung des ersten Stützelements in der ersten Aufnahmeöffnung angeordnet sein und in der zweiten Stellung des ersten Stützelements in der zweiten Aufnahmeöffnung angeordnet sein. Insbesondere kann das erste Stützenelement dadurch in der ersten Stellung angeordnet werden, dass das erste Verbindungselement in die erste Aufnahmeöffnung eingebracht wird und das erste Stützenelement kann dadurch in der zweiten Stellung angeordnet werden, dass das erste Verbindungselement in die zweite Aufnahmeöffnung eingebracht wird.

Das erste Stützenelement kann in die erste Stellung gebracht werden und das erste Verbindungselement kann anschließend in der ersten Aufnahmeöffnung angeordnet werden. Alternativ kann das Anordnen des ersten Stützenelements in der ersten Stellung zumindest teilweise gleichzeitig mit dem Anordnen des ersten Verbindungselements in der ersten Aufnahmeöffnung erfolgen. Entsprechend kann das erste Stützenelement in die zweite Stellung gebracht werden und das erste Verbindungselement kann anschließend in der zweiten Aufnahmeöffnung angeordnet werden oder das Anordnen des ersten Stützenelements in der zweiten Stellung kann zumindest teilweise gleichzeitig mit dem Anordnen des ersten Verbindungselements in der zweiten Aufnahmeöffnung erfolgen.

In alternativen Ausgestaltungen kann das erste Verbindungselement in der ersten oder der zweiten Aufnahmeöffnung angeordnet werden, bevor das erste Stützenelement in der ersten, respektive der zweiten Stellung angeordnet wird. In derartigen Ausgestaltungen kann vorgesehen sein, das zweite Verbindungselement an oder zumindest teilweise in der Grundschiene anzuordnen, nachdem das erste Verbindungselement in der ersten oder der zweiten Aufnahmeöffnung angeordnet wurde und das erste Stützenelement in der ersten, respektive der zweiten Stellung angeordnet wurde.

In beispielhaften Ausgestaltungen können das erste und / oder das zweite Verbindungselement Stifte oder Bolzen sein, welche in Öffnungen, insbesondere Aufnahmeöffnungen, der Grundschiene angeordnet werden können. Allgemein können Verbindungselemente als separate Bauteile bereitgestellt sein, welche an anderen Komponenten, beispielsweise einem Stützenelement, angeordnet und fixiert werden. Alternativ können Verbindungselemente Teil der Komponente sein, beispielsweise eine Ausformung einer solchen Komponente, und somit bereits beim Herstellungsprozess der betreffenden Komponente an dieser angeordnet werden.

Das erste Stützenelement und das zweite Stützenelement sind an einem Gelenkpunkt schwenkbar miteinander verbunden. Das erste Verbindungselement kann im Bereich eines von dem Gelenkpunkt entfernten Endes des ersten Stützenelements angeordnet sein und das zweite Verbindungselement kann im Bereich eines von dem Gelenkpunkt entfernten Endes des zweiten Stützenelements angeordnet sein. Mit dem Gelenkpunkt, dem ersten Verbindungselement und dem zweiten Verbindungselement kann somit ein Dreieck aufgespannt sein, derart, dass bei einer Anordnung des ersten Verbindungselements und des zweiten Verbindungselement an der Grundschiene der Abstand zwischen dem ersten Verbindungselement und dem zweiten Verbindungselement die Höhe des Gelenkpunkts und somit die Höhe der oberen Stütze über der Grundschiene bestimmt. In diesem Fall kann bei der Anordnung des ersten Stützenelements in der ersten Stellung und der Anordnung des ersten Verbindungselements in der ersten Aufnahmeöffnung ein erster Abstand zwischen dem ersten Verbindungselement und dem zweiten Verbindungselement und hiermit die erste Höhe der oberen Stütze über der Grundschiene eingestellt sein und bei der

Anordnung des ersten Stützenelements in der zweiten Stellung und der Anordnung des ersten Verbindungselements in der zweiten Aufnahmeöffnung kann ein zweiter Abstand zwischen dem ersten Verbindungselement und dem zweiten Verbindungselement und hiermit die zweite Höhe der oberen Stütze über der Grundschiene eingestellt sein.

Die Stützvorrichtung kann eine Sicherungsschiene aufweisen, welche die Grundschiene wenigstens teilweise umgreifend auf der Grundschiene angeordnet und entlang der Grundschiene zwischen einer ersten Stellung und einer zweiten Stellung beweglich ist. Hierbei kann die Sicherungsschiene wenigstens eine der ersten Aufnahmeöffnung und der zweiten Aufnahmeöffnung in der zweiten Position zumindest teilweise verschließen, derart, dass eine Bewegung des ersten Verbindungselements aus der ersten Aufnahmeöffnung und / oder der zweiten Aufnahmeöffnung heraus verhindert ist. Die Sicherungsschiene kann die erste Aufnahmeöffnung und die zweite Aufnahmeöffnung in der ersten Position freigeben, derart, dass eine Bewegung des ersten Verbindungselements aus der ersten Aufnahmeöffnung und der zweiten Aufnahmeöffnung heraus ermöglicht ist.

Die Sicherungsschiene kann mit einer Verbindungsschiene gebildet sein, welche eingerichtet ist, die Grundschiene mit einer weiteren Grundschiene einer weiteren Vorrichtung zu verbinden.

Es kann vorgesehen sein, dass die obere Stütze nur ein Verbindungselement aufweist und die Grundschiene mit nur einer für das Aufnehmen des Verbindungselements der oberen Stütze eingerichtete Aufnahmeöffnung gebildet ist. In derartigen Ausgestaltungen kann eine Sicherungsschiene vorgesehen sein, welche die Grundschiene wenigstens teilweise umgreifend auf der Grundschiene angeordnet und entlang der Grundschiene zwischen einer ersten Stellung und einer zweiten Stellung beweglich ist, wobei die Sicherungsschiene die Aufnahmeöffnung in der zweiten Position zumindest teilweise verschließt, derart, dass eine Bewegung des Verbindungselements aus der Aufnahmeöffnung heraus verhindert ist, und die Sicherungsschiene die Aufnahmeöffnung in der ersten Position freigibt, derart, dass eine Bewegung des Verbindungselements aus der Aufnahmeöffnung heraus ermöglicht ist.

Das zweite Verbindungselement kann in einer weiteren Aufnahmeöffnung der Grundschiene ortsfest angeordnet sein. Hierbei bedeutet eine ortsfeste Anordnung des zweiten Verbindungselements im Sinne der Offenbarung, dass das zweite Verbindungselement nicht gegenüber der Grundschiene verschiebbar, also translatorisch beweglich, ist. Eine Rotation des zweiten Verbindungselements kann hierbei ermöglicht sein.

Die Vorrichtung kann mit einer vormontierten oberen Stütze bereitgestellt sein, bei der das zweite Verbindungselement in der weiteren Aufnahmeöffnung der Grundschiene ortsfest angeordnet ist und das erste Stützelement zum Einstellen der ersten Höhe der oberen Stütze in der ersten Aufnahmeöffnung angeordnet werden kann, wobei das erste Stützenelement in die erste Stellung gebracht wird, und das erste Stützenelement zum Einstellen der zweiten Höhe der oberen Stütze in der zweiten Aufnahmeöffnung angeordnet werden kann, wobei das erste Stützenelement in die zweite Stellung gebracht wird.

In alternativen Ausgestaltungen kann die Grundschiene eine erste weitere Aufnahmeöffnung und eine zweite weitere Aufnahmeöffnung aufweisen und das zweite Verbindungselement kann eingerichtet sein, in der ersten weiteren Aufnahmeöffnung angeordnet zu werden, wenn das erste Stützenelement in der ersten Stellung angeordnet ist, und eingerichtet sein, in der zweiten weiteren Aufnahmeöffnung angeordnet zu werden, wenn das erste Stützenelement in der zweiten Stellung angeordnet ist.

Das zweite Verbindungselement kann in der weiteren Aufnahmeöffnung, beziehungsweise in einer oder beiden der ersten weiteren Aufnahmeöffnung und der zweiten weiteren Aufnahmeöffnung lösbar ortsfest angeordnet sein. Zum Beispiel kann das zweite Verbindungselement mittels der Sicherungsschiene sicherbar sein. Hierzu kann die Sicherungsschiene eingerichtet sein, in der zweiten Position und / oder in einer dritten Position der Sicherungsschiene entlang der Grundschiene, die weitere Aufnahmeöffnung, beziehungsweise eine oder beide der ersten weiteren Aufnahmeöffnung und der zweiten weiteren Aufnahmeöffnung zumindest teilweise verschließen, derart, dass eine Bewegung des zweiten Verbindungselements aus der weiteren Aufnahmeöffnung, beziehungsweise aus einer oder beiden der ersten weiteren Aufnahmeöffnung und der zweiten weiteren Aufnahmeöffnung heraus verhindert ist. In einer anderen Position, beispielsweise der ersten Position und / oder der zweiten Position, kann die Sicherungsschiene die weitere Aufnahmeöffnung, beziehungsweise die erste weitere Aufnahmeöffnung und die zweite weitere Aufnahmeöffnung freigeben, derart, dass eine Bewegung des zweiten Verbindungselements aus der weiteren Aufnahmeöffnung, beziehungsweise aus der ersten weiteren Aufnahmeöffnung und der zweiten weiteren Aufnahmeöffnung heraus ermöglicht ist.

Die obere Stütze kann sich in einer ersten Haltestellung, in der die obere Stütze eingerichtet ist, ein Solarmodul in einem ersten Winkel relativ zu der Grundschiene zu halten, und einer zweiten Haltestellung anordnen lassen, in der die obere Stütze eingerichtet ist, ein Solarmodul in einem zweiten Winkel relativ zu der Grundschiene zu halten, der von dem ersten Winkel verschieden ist.

Die obere Stütze kann in der ersten Haltestellung angeordnet sein, wenn das erste Stützenelement in der ersten Stellung angeordnet ist, und die obere Stütze kann in der zweiten Haltestellung angeordnet sein, wenn das erste Stützenelement in der zweiten Stellung angeordnet ist.

Die obere Stütze umfasst eine Haltevorrichtung, welche zum Halten eines jeweiligen Solarmoduls zwei Auflageflächen, auf welche jeweils ein oder mehrere Solarmodule aufgelegt und fixiert werden können, wobei die Auflageflächen unter einem Winkel zu einem mittleren Abschnitt der Haltevorrichtung angeordnet sind, um ein Solarmodul unter einem Winkel zur Horizontalen zu stützen. Die Haltevorrichtung kann eingerichtet sein, ein Solarmodul in einem festen Winkel zu der Haltevorrichtung zu halten, beispielsweise parallel zu einer Auflagefläche der Haltevorrichtung, und welche in einem ersten Winkel der Haltevorrichtung relativ zu der Grundschiene angeordnet ist, wenn das erste Stützenelement in der ersten Stellung angeordnet ist, und in einem zweiten Winkel der Haltevorrichtung relativ zu der Grundschiene angeordnet ist, wenn das erste Stützenelement in der zweiten Stellung angeordnet ist. In Ausgestaltungen mit einer schwenkbaren Verbindung des ersten Stützenelements und des zweiten Stützenelements an einem Gelenkpunkt kann die Haltevorrichtung eine über dem Gelenkpunkt angeordnete Auflagefläche und ein Klemmelement aufweisen, welches eingerichtet ist, ein Solarmodul relativ zu der Auflagefläche zu fixieren.

In beispielhaften Ausgestaltungen kann ein erster Winkel eines an der Vorrichtung anzuordnenden Solarmoduls relativ zu der Grundschiene etwa 10 Grad betragen und ein zweiter Winkel des Solarmoduls relativ zu der Grundschiene kann etwa 15 Grad betragen. In alternativen Ausgestaltungen kann der erste Winkel 5 Grad betragen und der zweite Winkel 7 Grad betragen.

Das erste Stützenelement kann in der ersten Stellung und in der zweiten Stellung jeweils gegenüber dem zweiten Stützenelement fixierbar sein, vorzugsweise lösbar fixierbar. Beispielsweise kann eine jeweilige Rastverbindung zwischen dem ersten Stützenelement und dem zweiten Stützenelement in der ersten Stellung und in der zweiten Stellung bereitgestellt sein. Hierbei kann ein federnder Vorsprung an einem der Stützenelemente in eine der ersten Position entsprechende Öffnung oder eine der zweiten Position entsprechende Öffnung des anderen Stützenelements greifen. Alternativ kann ein der ersten Position entsprechender federnder Vorsprung oder ein der zweiten Position entsprechender federnder Vorsprung an einem der Stützenelemente in eine Öffnung des anderen Stützenelements greifen. Ein federnder Vorsprung kann beispielsweise mit einer flexiblen Nase, einem Druckstück oder einem Federstift gebildet sein. Alternativ kann eine lösbare Verbindung mit einem Stift gebildet sein, welcher in entsprechenden Öffnungen des ersten und / oder des zweiten Stützenelements angeordnet wird. Als weitere Alternative können die Stützenelemente relativ zueinander fixierbar sein, indem sie zu einem weiteren Element fixiert werden, beispielsweise zu einem Verbindungselement des oberen Stütze, mit dem das erste Stützenelement und das zweite Stützenelement verbunden sind.

Es kann insbesondere vorgesehen sein, das erste Stützelement in der in der ersten Stellung bzw. in der zweiten Stellung gegenüber dem zweiten Stützenelement werkzeuglos zu fixieren, also ohne dass ein Nutzer der Vorrichtung ein Werkzeug benötigt, um die Fixierung zu erreichen. Alternativ kann das erste Stützelement in der in der ersten Stellung bzw. in der zweiten Stellung gegenüber dem zweiten Stützenelement unter Verwendung eines Werkzeugs lösbar oder nicht lösbar fixiert werden, beispielsweise durch Schrauben, Nieten, Kleben oder Schweißen.

Das erste Stützenelement kann relativ zu dem zweiten Stützenelement in eine Transportstellung des ersten Stützelements beweglich sein und das zweite Stützenelement kann relativ zu der Grundschiene in eine Transportstellung des zweiten Stützenelementes beweglich sein. Hiermit kann die obere Stütze im Wesentlichen innerhalb der Grundschiene angeordnet sein, wenn das erste Stützenelement und das zweite Stützenelement in der jeweiligen Transportstellung angeordnet sind. Somit kann die obere Stütze eingerichtet sein, von einer aufgebauten Stellung, in welcher die obere Stütze für das Stützen eines Solarmoduls eingerichtet ist und das erste Stützenelement in der ersten oder der zweiten Stellung angeordnet ist, eingeklappt zu werden, indem das erste und das zweite Stützenelement in die jeweilige Trans-Transportstellung bewegt werden. Hierdurch kann die Vorrichtung für einen Transport vorbereitet werden. Eine Anordnung im Wesentlichen innerhalb der Grundschiene ist im Sinne der Offenbarung dann erreicht, wenn sich das Gesamt-Querschnittsprofil der Grundschiene durch die zusätzlichen Elemente nicht wesentlich vergrößert. Insbesondere kann ein Transport der Vorrichtung ermöglicht sein, der sich bezüglich Raumbedarf und Handhabbarkeit von einem Transport nur der Grundschiene selbst außer hinsichtlich einer transportierten Masse nicht unterscheidet oder deutlich weniger vergrößert ist, als wenn das erste Stützenelement in der ersten Stellung oder in der zweiten Stellung angeordnet ist.

In Ausgestaltungen, in denen die Vorrichtung mit einer Sicherungsschiene gebildet ist, kann die Sicherungsschiene eingerichtet sein, das erste Stützenelement in der Transportstellung zu sichern. Hierzu kann die Sicherungsschiene beispielsweise Aussparungen oder mit einem Abstand gebildete Ausformungen aufweisen, welche durch Verschieben der Sicherungsschiene entlang der Grundschiene über das Verbindungselement oder die Verbindungselemente des in der Transportstellung angeordneten ersten Stützenelements bewegt werden können und so eine Bewegung des ersten Stützenelements einschränken oder verhindern.

Die Vorrichtung weist eine an der Grundschiene angeordnete untere Stütze für das Halten eines unteren Endes eines Solarmoduls auf. Die untere Stütze kann eingerichtet sein, ein unteres Ende eines Solarmoduls unter unterschiedlichen Winkeln des Solarmoduls gegenüber der Grundschiene zu halten. Alternativ kann die untere Stütze eingerichtet sein, ein unteres Ende eines Solarmoduls unter einem Winkel des Solarmoduls gegenüber der Grundschiene zu halten, wobei die untere Stütze für unterschiedliche Winkel des Solarmoduls einstellbar und / oder an der Grundschiene anzuordnen ist. Mit der unteren Stütze und der oberen Stütze kann die Vorrichtung für das Ausbilden eines Haltesystems für Solarmodule mit hohen und niedrigen Füßen eingerichtet sein.

Die obere Stütze kann eine Deflektorhalterung aufweisen, welche eingerichtet ist einen Winddeflektor an der oberen Stütze zu halten, derart, dass der Winddeflektor in einem ersten Deflektorwinkel relativ zu der Grundschiene angeordnet ist, wenn das erste Stützenelement in der ersten Stellung angeordnet ist, und der Winddeflektor in einem zweiten Deflektorwinkel relativ zu der Grundschiene angeordnet ist, wenn das erste Stützenelement in der zweiten Stellung angeordnet ist. Ein Winddeflektor kann eine Barriere darstellen, welche verhindert, dass Wind unter ein an der Vorrichtung angeordnetes Solarmodul gelangt, insbesondere eine flächige Barriere. Beispielsweise kann ein Winddeflektor mit einem Blech gebildet sein, welches eingerichtet ist, vor einer Öffnung in der Vorrichtung oder der Solarmodul-Anordnung angeordnet zu werden, um zu verhindern, dass Wind durch die Öffnung gelangt. Mittels der Deflektorhalterung kann die Vorrichtung eingerichtet sein, einen Winddeflektor aufzunehmen, derart, dass der Winddeflektor für die Vorrichtung und / oder die Solarmodul-Anordnung einsetzbar ist, sowohl wenn das erste Stützenelement in der ersten Stellung angeordnet ist, als auch, wenn das erste Stützenelement in der zweiten Stellung angeordnet ist.

Unabhängig von der Vorrichtung ist mit der Offenbarung eine Deflektorhalterung bereitgestellt, welche eingerichtet ist einen Winddeflektor an einer oberen Stütze eines Haltesystems für Solarmodule, einer Solarmodul-Anordnung oder einer Vorrichtung zum Stützen von Solarmodulen zu halten, derart, dass der Winddeflektor in einem ersten Deflektorwinkel relativ zu einer Grundschiene des Systems, der Vorrichtung oder der Solarmodul-Anordnung angeordnet ist, wenn sich die obere Stütze bis zu einer ersten Höhe über der Grundschiene erstreckt, und der Winddeflektor in einem zweiten Deflektorwinkel relativ zu der Grundschiene angeordnet ist, wenn sich die obere Stütze bis zu einer zweiten Höhe über der Grundschiene erstreckt, die von der ersten Höhe verschieden ist. Hierbei kann die obere Stütze aus mehreren oberen Stützen mit verschiedenen Höhen gewählt sein. Alternativ kann die obere Stütze höhenverstellbar sein.

Die Deflektorhalterung kann eine konvexe Auflagefläche aufweisen, insbesondere eine entlang eines Kreisbogens verlaufende konvexe Auflagefläche. Der Winddeflektor kann eine auf die konvexe Auflagefläche angepasste konkave Kontaktfläche aufweisen, welche auf der konvexen Auflagefläche der Deflektorhalterung aufliegt. Insbesondere kann die konkave Kontaktfläche entlang eines Kreisbogens mit einem Durchmesser verlaufen, welcher gleich dem Durchmesser des Kreisbogens ist, entlang welchem die konvexe Auflagefläche verläuft. Der Winddeflektor kann relativ zu der Deflektorhalterung derart drehbar sein, dass während einer Drehung des Winddeflektors relativ zu der Deflektorhalterung ein Kontakt zwischen der konkaven Kontaktfläche auf der konvexen Auflagefläche bestehen bleibt. Somit kann der Winddeflektor relativ zu der Deflektorhalterung drehbar sein, während der Winddeflektor auf der Deflektorhalterung aufliegt. Auf diese Weise kann ein Deflektorwinkel stufenlos einstellbar sein. Ein Deflektorwinkel kann sich bei Auflage der Kontaktfläche auf der Auflagefläche durch einen Höhe der Deflektorhalterung über der Grundschiene automatisch einstellen, wenn ein der Kontaktfläche entgegengesetztes Ende des Winddeflektors auf der Grundschiene oder im Bereich der Grundschiene angeordnet ist. Der Winddeflektor kann an der Deflektorhalterung in einer ersten Stellung, in welcher der Winddeflektor in einem ersten Deflektorwinkel zu der Grundschiene angeordnet ist, und / oder in einer zweiten Stellung, in welcher der Winddeflektor in einem ersten Deflektorwinkel zu der Grundschiene angeordnet ist, fixierbar sein, vorzugsweise lösbar fixierbar. Insbesondere kann der Winddeflektor an der Deflektorhalterung werkzeuglos fixierbar sein, beispielsweise mittels Rastelementen, wie federnden Nasen, Druckstücke oder Federstiften, welche in entsprechende Öffnungen greifen, oder mittels werkzeuglos nutzbarer Verbindungselemente, beispielsweise von Hand einsetzbare Stifte oder Flügelschrauben. Alternativ oder zusätzlich kann der Winddeflektor an der Deflektorhalterung mittels eines Werkzeugs fixierbar sein, beispielsweise durch Schrauben, Nieten, Kleben oder Schweißen.

Die Grundschiene kann eingerichtet sein, ein Kabel eines Solarmoduls aufzunehmen und zu führen. Hierzu kann die Grundschiene eine oder mehrere Kabelaufnahmeeinrichtungen aufweisen. Beispielsweise können Kabelaufnahmeeinrichtungen mit Kanälen zur Führung von Kabeln gebildet sein, insbesondere entlang des Verlaufs der Grundschiene. Mit der Aufnahme und Führung des Kabels in der Grundschiene, insbesondere in einer oder mehreren Kabelaufnahmeeinrichtungen, kann das Kabel vor Beschädigung geschützt sein, insbesondere gegen eine Beschädigung durch scharfe Kanten der Grundschiene oder anderer Komponenten der Vorrichtung. Hierdurch kann auch bei der Verwendung abgelängter Profilschienen in der Vorrichtung eine schnelle und sichere Verlegung von Kabeln ermöglicht sein. Die Grundscheine kann für die Aufnahme und Führung mehrerer Kabel eingerichtet sein.

Eine oder mehrere Kabelaufnahmeeinrichtungen können mit der Grundschiene selbst gebildet sein. Insbesondere kann ein die Grundschiene bildendes Profil so ausgestaltet sein, dass es eine Kabelführung erlaubt. Beispielsweise kann die Grundschiene die Form eines Kabelkanals haben. Der Abstand zwischen einem inneren Schienenboden und anderen, darüber liegenden Elementen wie Stiften oder Stützen kann so dimensioniert sein, dass ein Stecker, insbesondere ein einem entsprechenden Standard entsprechender Stecker, eines Kabels eines Solarmoduls durch einen mit dem Abstand gebildeten Freiraum bewegt werden kann. Die Grundschiene kann eingerichtet sein, mehrere Kabel aufzunehmen. Insbesondere kann die Grundschiene für die Aufnahme mehrerer Kabel dimensioniert sein.

Die Grundschiene kann somit neben einer strukturellen Funktion in der Vorrichtung zusätzlich die Funktion eines Kabelkanals übernehmen. Hierdurch kann die Notwendigkeit entfallen, zusätzliche Einrichtungen zur Kabelführung bereitzustellen. Somit kann eine Kostensenkung erreicht sein, insbesondere durch eine Reduzierung von Produktions- Logistik und Montagekosten.

Weiterhin kann eine Sicherungsschiene und / oder eine Verbindungsschiene, insbesondere eine mit einer Verbindungsschiene gebildete Sicherungsschiene, eingerichtet sein ein Kabel eines Solarmoduls aufzunehmen und zu führen. Die oben dargelegten Ausführungen zur Ausgestaltung der Grundschiene für die Aufnahme und Führung eines Kabels eines Solarmoduls können hierbei entsprechend vorgesehen sein.

Unabhängig von der sonstigen Ausgestaltung der Vorrichtung ist mit der Offenbarung eine Grundschiene für ein Haltesystem für Solarmodule für eine Solarmodul-Anordnung oder für eine Vorrichtung zum Stützen von Solarmodulen bereitgestellt, die eingerichtet ist, ein Kabel eines Solarmoduls aufzunehmen und zu führen. Hierbei gelten die obigen Ausführungen zu der Einrichtung der Grundschiene der Vorrichtung für das Aufnehmen und Führen eines Kabels entsprechend.

Die Grundschiene kann dafür eingerichtet sein, dass eine Seite einer Ballasthaltevorrichtung auf ihr angeordnet wird, derart, dass die Ballasthaltevorrichtung auf der Grundschiene zumindest abschnittsweise aufliegt und die obere Stütze kann eingerichtet sein, zumindest abschnittsweise in wenigstens einer Öffnung der Ballasthaltevorrichtung angeordnet zu werden, wenn diese auf der Grundschiene zumindest abschnittsweise aufliegt, wobei die obere Stütze derart geformt ist, dass sie hierbei eine Bewegung der Ballasthaltevorrichtung nach oben im Wesentlichen verhindert. Mit der Formgebung der oberen Stütze ist in einer Bewegungsrichtung der Ballasthaltevorrichtung nach oben ein Formschluss zwischen der oberen Stütze und der Ballasthaltevorrichtung hergestellt, zumindest insoweit, dass eine Bewegung der Ballasthaltevorrichtung nach oben im Wesentlichen verhindert ist. In andere Richtungen kann eine Bewegung der Ballastvorrichtung nicht durch die Formgebung der oberen Stütze verhindert sein. Alternativ kann durch die Formgebung der oberen Stütze auch eine Bewegung der Ballastvorrichtung in andere Richtungen verhindert sein. Eine Bewegung der Ballasthaltevorrichtung nach oben ist im Wesentlichen verhindert, wenn sich die Ballasthaltevorrichtung nicht so weit nach oben bewegen kann, dass sie von der Grundschiene entfernt werden kann, insbesondere durch Windeinwirkung. Ein geringes Spiel in Form einer Bewegung der Ballasthaltevorrichtung relativ zu der Grundschiene, welches eine Positionssicherung der Ballasthaltevorrichtung an der Grundschiene nicht beeinträchtigt, kann hierbei möglich sein.

Ein Anordnen der oberen Stütze zumindest abschnittsweise in wenigstens einer Öffnung der Ballasthaltevorrichtung kann insbesondere das Anordnen des ersten und / oder des zweiten Stützenelements in der Öffnung oder in verschiedenen Öffnungen der Ballasthaltevorrichtung umfassen.

Eine Formgebung der oberen Stütze kann eine Bewegung der Ballasthaltevorrichtung nach oben im Wesentlichen verhindern, indem sich ein Profil der oberen Stütze oberhalb der Ballastvorrichtung vergrößert. Alternativ oder zusätzlich kann die obere Stütze oberhalb der Ballasthaltevorrichtung nicht gerade nach oben verlaufen. Beispielsweise kann die obere Stütze zumindest oberhalb der Ballasthaltevorrichtung schräg verlaufen, so dass eine Bewegung der Ballasthaltevorrichtung nach oben ist im Wesentlichen zumindest dann verhindert ist, wenn gleichzeitig eine Bewegung der Ballasthaltevorrichtung nach vorne und / oder hinten in Erstreckungsrichtung der Grundschiene verhindert ist, so dass die Ballasthaltevorrichtung dem Verlauf der oberen Stütze nicht folgen kann.

Die Ballasthaltevorrichtung kann eine Ballastwanne oder Ballastschiene sein, welche eine Vertiefung zur Aufnahme von Ballast sowie einen Auflagerand aufweist, welcher eingerichtet ist, auf der Grundschiene angeordnet zu werden. Die wenigstens eine Öffnung der Ballasthaltevorrichtung kann mit einem Ausschnitt in dem Auflagerand gebildet sein, welcher zu einer seitlichen Kante der Ballasthaltevorrichtung geöffnet ist. Der Ausschnitt kann die obere Stütze umgreifen. Hierbei können Kanten des Ausschnitts in Erstreckungsrichtung der Grundschiene vorne und hinten an der oberen Stütze anliegen, so dass eine Bewegung der Ballasthaltevorrichtung nach vorne und hinten im Wesentlichen verhindert ist.

Mit der Offenbarung ist eine Vorrichtung zum Stützen von Solarmodulen bereitgestellt, mit einer Grundschiene, einer an der Grundschiene angeordneten oberen Stütze für das Halten eines oberen Endes eines Solarmoduls und einer Ballastvorrichtung für die Aufnahme von Ballast, wobei eine Seite der Ballasthaltevorrichtung auf der Grundschiene angeordnet ist, derart, dass die Ballasthaltevorrichtung auf der Grundschiene zumindest abschnittsweise aufliegt und die obere Stütze zumindest abschnittsweise in wenigstens einer Öffnung der Ballasthaltevorrichtung angeordnet ist, wobei die obere Stütze derart geformt ist, dass hierbei eine Bewegung der Ballasthaltevorrichtung nach oben im Wesentlichen verhindert ist. Im Zusammenhang mit einer solchen Vorrichtung gelten die obigen Ausführungen zu der Ballasthaltevorrichtung und deren Anordnung in einer Vorrichtung zum Stützen von Solarmodulen, in dem die obere Stütze ein erstes Stützenelemente und ein zweites Stützenelement aufweist, entsprechend.

Die obere Stütze kann mehrere erste Verbindungselemente aufweisen. Beispielweise kann die obere Stütze zwei an dem ersten Stützenelement angeordnete erste Verbindungselemente aufweisen, welche zum Beispiel als Stifte separat oder als Ausformungen des ersten Stützenelements ausgebildet sind und sich in entgegengesetzte Richtungen quer zu einer Erstreckungsrichtung der Grundschiene von dem ersten Stützenelement weg erstrecken. Hierbei können sich die erste Aufnahmeöffnung und die zweite Aufnahmeöffnung durch gegenüberliegende Wandungen der Grundschiene erstrecken, so dass die zwei ersten Verbindungselemente auf jeweils einer Wandung der Grundschiene zu liegen kommen, wenn die ersten Verbindungselemente in der ersten Aufnahmeöffnung oder der zweiten Aufnahmeöffnung angeordnet sind, und so das erste Stützenelement beidseitig auf der Grundschiene abstützen. Alternativ oder zusätzlich kann die obere Stütze mehrere zweite Verbindungselemente aufweisen, wobei hierbei die in Verbindung mit mehreren ersten Verbindungselementen ausgeführten Ausbildungen entsprechend vorgesehen sein können.

Aufnahmeöffnungen der Grundschiene können insbesondere zu einer Oberseite der Grundschiene geöffnet sein. Beispielsweise können Aufnahmeöffnungen als nach oben offene Aussparungen der Grundschiene ausgestaltet sein, welche sich über die gesamte Breite der Grundschiene erstrecken und in welche quer zu einer Erstreckungsrichtung der Grundschiene verlaufende Verbindungselemente von oben eingelegt werden können. Alternativ können Aufnahmeöffnungen mit seitlich begrenzten Öffnungen in einer Oberseite der Grundschiene gebildet sein, beispielsweise mit Bohrungen in der Oberseite der Grundschiene. In derartigen Ausgestaltungen können beispielsweise senkrecht verlaufende Verbindungselemente, beispielsweise senkrecht angeordnete Stifte, von oben in die Aufnahmeöffnungen eingesetzt oder eingesteckt werden. Als weitere Alternative können zu einer Seite der Grundschiene geöffnete Aufnahmeöffnungen bereitgestellt sein, welche analog zu den Ausführungen mit nach oben geöffneten Aufnahmeöffnungen ausgestaltet sein können und in welche entsprechende Verbindungselemente der oberen Stütze von der betreffenden Seite der Grundschiene eingebracht werden können.

Das erste Stützenelement und das zweite Stützenelement können gleich ausgestaltet sein und zur Ausbildung der oberen Stütze miteinander verbunden werden. Zum Beispiel können das erste Stützenelement und das zweite Stützenelement die gleiche Form aufweisen und zueinander um einen Winkel von 180 Grad um eine Längsachse verdreht angeordnet und miteinander verbunden sein, beispielsweise an einem Gelenkpunkt.

Allgemein können über die erste und die zweite Stellung eines ersten Stützenelements hinaus weitere Stellungen vorgesehen sein. Im Zusammenhang mit der Vorrichtung zum Stützen von Solarmodulen können hierbei insbesondere weitere Höhen der oberen Stütze über der Grundschiene einstellbar sein. Im Zusammenhang mit der Anordnung können weitere Neigungswinkel des Solarmoduls gegenüber der Grundschiene vorgesehen sein. Hierbei können die Anzahl weiterer Elemente und deren mögliche Positionen entsprechend angepasst sein. Beispielsweise können zusätzliche Aufnahmeöffnungen vorgesehen sein.

Die Solarmodul-Anordnung kann mehrere Stützvorrichtungen aufweisen. Bei einer Ausgestaltung mit zwei Stützvorrichtungen können eine erste Stützvorrichtung und eine zweite Stützvorrichtung zueinander derart angeordnet und ausgerichtet sein, dass die Grundschiene der ersten Stützvorrichtung und die Grundschiene der zweiten Stützvorrichtung im Wesentlichen parallel verlaufen und die obere Stütze der ersten Stützvorrichtung der oberen Stütze der zweiten Stützvorrichtung direkt gegenüber angeordnet sein. Das Solarmodul kann hierbei mit einer ersten Seite auf der ersten Stützvorrichtung angeordnet sein, wobei ein oberes Ende des Solarmoduls im Bereich der ersten Seite von der oberen Stütze der ersten Stützvorrichtung gehalten wird. Mit einer der ersten Seite gegenüberliegenden zweiten Seite kann das Solarmodul auf der zweiten Stützvorrichtung angeordnet sein, wobei das obere Ende des Solarmoduls im Bereich der zweiten Seite von der oberen Stütze der zweiten Stützvorrichtung gehalten wird. Die jeweiligen ersten Stützenelemente der ersten und der zweiten Stützvorrichtung sind entweder jeweils in der ersten Stellung angeordnet, wobei beide ersten Stützenelemente gegenüber der jeweiligen Grundschiene derart angeordnet sind, dass das Solarmodul gegenüber den Grundschienen in dem ersten Neigungswinkel angeordnet ist, oder die jeweiligen ersten Stützenelemente der ersten und der zweiten Stützvorrichtung sind in der jeweiligen zweiten Stellung angeordnet, wobei beide ersten Stützenelemente gegenüber der jeweiligen Grundschiene derart angeordnet sind, dass das Solarmodul gegenüber den Grundschienen in dem zweiten Neigungswinkel angeordnet ist.

Die Solarmodul-Anordnung kann eine dritte Stützvorrichtung aufweisen, welche beispielsweise mit zu den Grundschienen der ersten und zweiten Stützvorrichtung parallel ausgerichteter Grundschiene zwischen der ersten und der zweiten Stützvorrichtung angeordnet ist und das Solarmodul mittig stützt. Weiterhin kann die Solarmodul-Anordnung eine beliebige Anzahl weiterer Stützvorrichtungen aufweisen.

Ein im Wesentlichen paralleler Verlauf von Grundschienen verschiedener Stützvorrichtungen bedeutet einen im Rahmen der üblichen Montagetoleranzen bei der Montage von Solarmodulen parallelen Verlauf der Grundschienen. Eine Anordnung der oberen Stütze der ersten Stützvorrichtung direkt gegenüber der oberen Stütze der zweiten Stützvorrichtung kann insbesondere bedeuten, dass eine senkrecht zu den Grundschienen der ersten und der zweiten Stützvorrichtung verlaufende Gerade durch einen Punkt der oberen Stütze der ersten Stützvorrichtung auch durch den gleichen Punkt der oberen Stütze der zweiten Stützvorrichtung verläuft oder von diesem Punkt unter einem nur kleinen Abstand verläuft. Die im Wesentlichen parallele Anordnung von Grundschienen und Anordnung von Stützen direkt einander gegenüber ist insbesondere erfüllt, wenn eine Anordnung einer Vielzahl von Solarmodulen neben- und entlang von Grundschienen hintereinander ermöglicht ist, ohne dass es zwischen jeweiligen Rahmen der Solarmodule zu Beeinträchtigungen untereinander kommt, beispielsweise Kollisionen oder Überschneidungen.

Zwei Solarmodule können in einer Solarmodul-Anordnung nebeneinander angeordnet sein, wobei ein Solarmodul mit einer ersten Seite auf einer Stützvorrichtung angeordnet ist und ein weiteres Solarmodul mit einer zweiten Seite auf derselben Stützvorrichtung angeordnet ist. Hierbei kann die jeweils andere Seite der Solarmodule auf einer jeweiligen weiteren Stützvorrichtung angeordnet sein, welche ein seitliches Ende der Solarmodul-Anordnung bilden können oder auf welchen wiederum eine jeweilige Seite weiterer Solarmodule angeordnet sein kann.

Zwei Solarmodule können in einer Solarmodul-Anordnung hintereinander angeordnet sein, wobei die Neigung der Solarmodule in dieselbe oder in entgegengesetzte Richtungen abfallend sein kann. Bei einer gleich ausgerichteten Neigung kann ein jeweiliges oberes Ende der Solarmodule von einer jeweiligen oberen Stütze gehalten werden. Bei einer entgegengesetzten Neigung der Solarmodule kann ein jeweiliges oberes Ende beider Solarmodule von derselben oberen Stütze gehalten werden.

In einer Solarmodul-Anordnung kann eine Anordnung von Solarmodulen sowohl nebeneinander als auch hintereinander vorgesehen sein, wobei die oben dargelegten Ausführungen solcher Anordnungen entsprechend vorgesehen sein können. Bei einer Anordnung von zwei Solarmodulen nebeneinander und zwei weiterer Solarmodule hintereinander mit entgegengesetzter Neigung kann können die vier Solarmodule insbesondere in einem jeweiligen Eckbereich von derselben oberen Stütze gehalten werden.

Eine Stützvorrichtung der Solarmodul-Anordnung kann eine Vorrichtung zum Stützen von Solarmodulen gemäß der Offenbarung sein. Eine Stützvorrichtung, insbesondere eine Vorrichtung zum Stützen von Solarmodulen gemäß der Offenbarung, kann eingerichtet sein, ein jeweiliges oberes Ende von bis zu vier Solarmodulen im Bereich einer Seite zu halten. Hierzu kann die obere Stütze der Stützvorrichtung eines oder mehrere Anschlagelemente aufweisen, an welche Solarmodule, insbesondere Rahmenprofile von Solarmodulen, für eine Montage an der Stützvorrichtung angelegt werden können. Insbesondere kann mit dem einen oder den mehreren Anschlagelementen ein jeweiliger Anschlag für eine jeweilige Oberkante und / oder für eine jeweilige Seitenkanten von vier Solarmodulen gebildet sein. Alternativ oder zusätzlich kann die obere Stütze der Stützvorrichtung Befestigungselemente, beispielsweise Klemmelemente und / oder Schraubelemente, für eine jeweilige Befestigung eines jeweiligen oberen Endes von bis zu vier Solarmodulen aufweisen.

Bei dem Bausatz, dem Verfahren zum Herstellen einer Vorrichtung zum Stützen von Solarmodulen und / oder der Solarmodul-Anordnung können die im Zusammenhang mit der Vorrichtung zum Stützen von Solarmodulen beschriebenen Ausgestaltungen entsprechend vorgesehen sein und umgekehrt.

Insbesondere kann bei der Solarmodul-Anordnung ein Winddeflektor und / oder eine Ballasthaltevorrichtung vorgesehen sein, welche mit einer ersten Seite auf der ersten Vorrichtung angeordnet ist und mit einer der ersten Seite gegenüberliegenden zweiten Seite auf der zweiten Vorrichtung angeordnet ist, wobei die im Zusammenhang mit der Vorrichtung beschriebenen Ausgestaltungen im Zusammenhang mit dem Winddeflektor und / oder mit der Ballasthaltevorrichtung entsprechend für die Stützvorrichtung oder die Stützvorrichtungen betreffend jeweils eine Seite des Winddeflektors und / oder der Ballasthaltevorrichtung vorgesehen sein können. Alternativ oder zusätzlich kann vorgesehen sein, dass wenigstens eine Grundschiene der Stützvorrichtung oder der Stützvorrichtungen entsprechend den beschriebenen Ausgestaltungen eingerichtet ist, eines oder mehrere Kabel eines Solarmoduls aufzunehmen und zu führen.

Die Stützvorrichtung kann alternativ oder ergänzend zu den beschriebenen Ausführungsbeispielen in einer Ausgestaltung im Bereich der Grundschiene und der Sicherungsschiene mit einem Wasserablaufsystem gebildet sein. Hierzu können im Bodenbereich der Grundschiene Ablaufrillen vorgesehen sein, die sich in Längsrichtung der Grundschiene erstrecken und dazu dienen, Wasser abzuleiten, insbesondere Regenwasser. Sind in die Grundschiene Kabel eingelegt, so ist hierdurch vermieden, dass die Kabel im Wasser liegen. Das so über die Ablaufrillen von der Grundschiene ablaufende oder abgeführte Wasser kann dann auf die darunterliegende Sicherungsschiene gelangen und dort entlang von Vertiefungen, die an der Sicherungsschiene im Bodenbereich gebildet sind, nach außen abgeführt werden. Mittels der Vertiefungen und dem darüber angeordneten Boden der Sicherungsschiene sind Ablaufkanäle gebildet.

In einer weiteren Ausführungsform kann alternativ oder ergänzend zu den beschriebenen Ausführungsbeispielen vorgesehen sein, dass die untere Stütze mit einem an der Grundschiene schwenkbar gelagerten Stützbauteil gebildet ist. Das Stütz- oder Haltebauteil stellt zum Auflegen des Solarmoduls eine Auflagefläche bereit, wobei nebeneinander gebildeten Auflageflächen ein Distanzzapfen angeordnet sein kann, mit dem ein Anschlag für die beidseitig anzuordnenden Solarmodule gebildet ist. Das Haltebauteil ist um eine Schwenkachse schwenkbar an der Grundschiene gelagert, die sich quer zur Längsrichtung der Grundschiene erstreckt. Haltekrallen können die Grundschiene auf gegenüberliegenden Seiten und beabstandet zur Grundschiene umgreifen, so dass in den Abstandsbereich zwischen Grundschiene und Haltekralle die Scherungsschiene geschoben werden kann. Wird das Haltebauteil um die Schwenkachse geschwenkt, können die Haltekrallen vom Eingriff gelöst werden (mittels Schwenken nach oben). Die schwenkbare Lagerung des Haltebauteils ermöglicht so eine stufenlose Anpassung an unterschiedliche Neigungswinkel des Solarmoduls.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine Vorrichtung zum Stützen von Solarmodulen in einer ungesicherten Konfiguration;
- Fig. 2: eine weitere Vorrichtung zum Stützen von Solarmodulen in einer gesicherten Konfiguration;
- Fig. 3: noch eine weitere Vorrichtung zum Stützen von Solarmodulen in einer Transportkonfiguration;
- Fig. 4A: eine Vorrichtung zum Stützen von Solarmodulen mit einer niedrigen oberen Stütze;
- Fig. 4B: eine weitere Vorrichtung zum Stützen von Solarmodulen mit einer hohen oberen Stütze;
- Fig. 5: eine Solarmodul-Anordnung in einer einseitigen 10-Grad-Konfiguration;
- Fig. 6: eine weitere Solarmodul-Anordnung in einer einseitigen 15-Grad-Konfiguration;
- Fig. 7: noch eine weitere Solarmodul-Anordnung in einer zweiseitigen 10-Grad-Konfiguration;
- Fig. 8A: eine Detailansicht einer Solarmodul-Anordnung;
- Fig. 8B: eine Detailansicht einer weiteren Solarmodul-Anordnung;
- Fig. 9: eine schematische Darstellung einer Anordnung für eine Vorrichtung zum Stützen eines Solarmoduls mit der Grundschiene;
- Fig. 10: eine schematische Darstellung eines Abschnitts der Anordnung aus Fig. 9 mit einem Stütz- oder Haltbauteil;
- Fig. 11: eine schematische Darstellung einer Anordnung für eine Vorrichtung zum Stützen eines Solarmoduls mit einem seitlichen Winddeflektor;
- Fig. 12: eine schematische Darstellung eines Abschnitts der Anordnung aus Fig. 11;
- Fig. 13: eine vergrößerte schematische Darstellung des Abschnitts der Anordnung aus Fig. 12;
- Fig. 14: eine vergrößerte schematische Darstellung des Abschnitts der Anordnung aus Fig. 13 mit einem Stütz- oder Haltebauteil und
- Fig. 15: eine vergrößerte schematische Darstellung des Abschnitts der Anordnung aus Fig. 14.

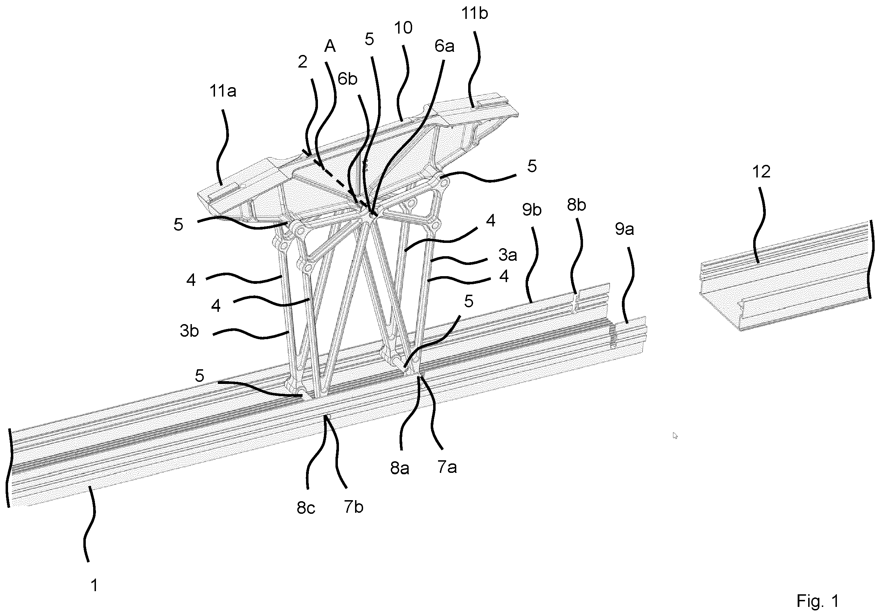

Die Fig. 1 zeigt eine Vorrichtung zum Stützen von Solarmodulen. Die Vorrichtung ist mit einer Grundschiene 1 gebildet. An der Grundschiene 1 ist eine obere Stütze 2 angeordnet, welche dem Halten eines oberen Endes eines Solarmoduls auf einer Seite des Solarmoduls dient.

Die obere Stütze 2 ist höhenverstellbar. Hierzu ist die Stütze mit zwei Stützenelementen 3a, 3b gebildet. In dem Ausführungsbeispiel der Fig. 1 ist jedes der Stützenelemente 3a, 3b mit zwei Metallguss-Teilen 4 gebildet, welche durch zylindrische Stiften 5 miteinander verbunden sind. In der gezeigten Ausführung sind die vier Metallguss-Teile 4 baugleich.

Die Stützenelemente 3a, 3b sind an zwei Gelenkpunkten 6a, 6b, welche auf einer Gelenkachse A liegen, mittels eines zylindrischen Stifts 5 miteinander verbunden, wobei eine Rotation um die Gelenkachse A ermöglicht ist. Hierdurch sind die Stützenelemente 3a, 3b zueinander schwenkbar. An einem jeweiligen unteren Ende der Stützenelemente 3a, 3b sind die zylindrischen Stifte 5 mit jeweils zwei Verbindungselementen 7a, 7b gebildet, welche seitlich aus den Stützenelementen 3a, 3b herausragen.

Die Verbindungselemente 7a, 7b können in Aufnahmeöffnungen 8a, 8b, 8c der Grundschiene 1 angeordnet werden. Hierbei sind eine erste Aufnahmeöffnung 8a und eine zweite Aufnahmeöffnung 8b der Grundschiene jeweils als eine die Grundschiene 1 auf ihrer gesamten Breite durchsetzende zu einer Oberseite der Grundschiene geöffnete Aussparung gebildet, welche in gegenüberliegenden Seitenwänden 9a, 9b der Grundschiene 1 jeweils eine Langloch-Form bilden. Die Verbindungselemente 7a eines ersten Stützenelements 3a können von oben in die erste Aufnahmeöffnung 8a oder die zweite Aufnahmeöffnung 8b eingesetzt werden. Hierdurch ist die jeweilige Position des unteren Endes des ersten Stützenelements 3a entlang des Verlaufs der Grundschiene 3 festgelegt. In der Vorrichtung gemäß der Fig. 1 sind die ersten Verbindungselemente 7a in der ersten Aufnahmeöffnung 8a angeordnet.

Eine weitere Aufnahmeöffnung 8c der Grundschiene 1 ist als eine die gesamte Breite der Grundschiene 1 durchsetzende Aussparung mit kreisförmigem Querschnitt gebildet, welche in den gegenüberliegenden Seitenwänden 9a, 9b der Grundschiene 1 Kreisbohrungen bildet. Die Verbindungselemente 7b eines zweiten Stützenelements 3b sind in der weiteren Aufnahmeöffnung 8c drehbar angeordnet. In der gezeigten Ausführung sind die Verbindungselemente 7b des zweiten Stützenelements 3b als in dem betreffenden zylindrischen Stift 5 angeordnete und aus diesem hervorragende Stiftenden ausgebildet, welche in die weiteren Aufnahmeöffnung 8c eingreifen und das untere Ende des zweiten Stützenelements 3b entlang der Erstreckungsrichtung der Grundschiene 1 ortsfest fixieren.

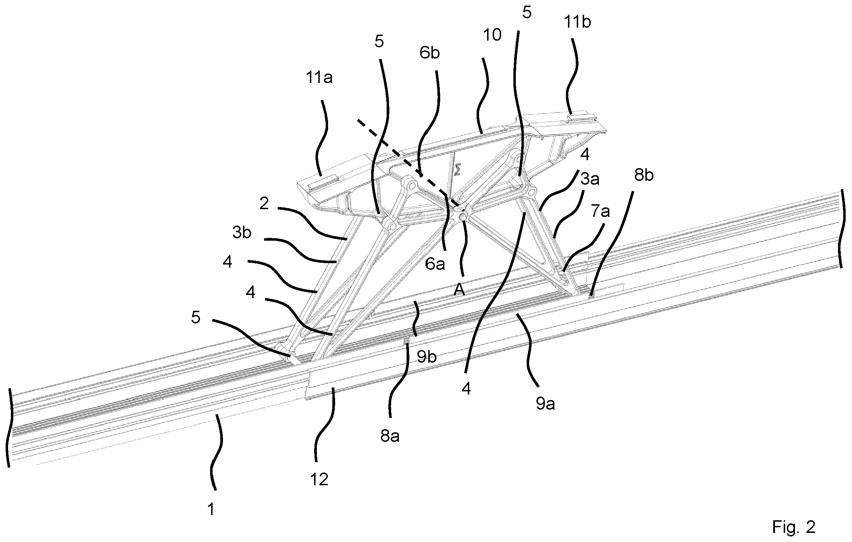

Die Fig. 2 zeigt eine Vorrichtung zum Stützen von Solarmodulen, in der im Vergleich zu der Ausgestaltung der Fig. 1 die Verbindungselemente 7a des ersten Stützenelements 3a in der zweiten Aufnahmeöffnung 8b der Grundschiene 1 angeordnet sind. Hierdurch sind das erste Stützenelement 3a und das zweite Stützenelement 3b gegenüber der in der Fig. 1 gezeigten Konfiguration zueinander verschwenkt und ein Abstand zwischen den unteren Enden des ersten Stützenelements 3a und des zweiten Stützenelements 3b, welcher durch den Abstand der ersten Verbindungselemente 7a zu den zweiten Verbindungselementen 7b bestimmt ist, ist vergrößert. Somit ist die Höhe des jeweiligen Dreiecks über der Grundschiene 1 verringert, welches durch die ersten Verbindungselemente 7a, die zweiten Verbindungselemente 7b sowie die Gelenkpunkte 6a, 6b gebildet wird. Es ergibt sich eine geringere Gesamthöhe der oberen Stütze der Ausgestaltung der Fig. 2 im Vergleich zu der oberen Stütze der in der Fig. 1 gezeigten Ausgestaltung. Zudem verschiebt sich ein Auflagepunkt für ein Solarmodul relativ zu der Grundschiene 1. Hierdurch ergibt sich für ein Solarmodul, dessen oberes Ende an der jeweiligen obere Stütze 2 gehalten wird und dessen unteres Ende sich auf der Höhe der jeweiligen Grundschiene 1 befindet, zwischen den Konfigurationen der Fig. 1 und 2 ein unterschiedlicher Winkel gegenüber der Horizontalen.

Im Vergleich der Darstellungen der Fig. 1 und 2 ist erkennbar, dass je nach Anordnung der ersten Verbindungselemente 7a in der ersten 8a oder zweiten 8b Aufnahmeöffnung die entlang des Verlaufs der Grundschiene 1 vor und hinter den Gelenkpunkten 6a, 6b angeordneten zylindrischen Stifte 5 mit unterschiedlichen Öffnungen der Metallguss-Teile 4 des ersten 3a und zweiten 3b Stützenelements in Kontakt treten. Hierbei sind zur zusätzlichen Stabilisierung der oberen Stütze 2 die betreffenden Stifte 5 in den entsprechenden Öffnungen gesichert.

Die obere Stütze 2 weist eine Haltevorrichtung 10 auf, welche zum Halten eines jeweiligen Solarmoduls zwei Auflageflächen 11a, 11b aufweist, auf welche jeweils ein oder mehrere Solarmodule aufgelegt und fixiert werden können. Die Auflageflächen 11a, 11b sind unter einem Winkel zu einem mittleren Abschnitt der Haltevorrichtung 10 angeordnet, um ein Solarmodul unter einem Winkel zur Horizontalen zu stützen. Auf den Auflageflächen 11a, 11b sind jeweils Anschläge gebildet, an welchen auf der Haltevorrichtung 10 anzuordnende Solarmodule seitlich angelegt werden können um diese auszurichten, insbesondere mit einer Rahmenkonstruktion der Solarmodule. Es ist somit erkennbar, dass in der dargestellten Ausführung die Haltevorrichtung 10 für das Halten von vier Solarmodulen eingerichtet ist, nämlich jeweils zwei seitlich nebeneinander angeordnete Solarmodule auf jeder der Auflageflächen 11a, 11b.

Wie im Vergleich der Fig. 1 und 2 zu erkennen ist, weisen die erste Aufnahmeöffnung 8a und die zweite Aufnahmeöffnungen 8b unterschiedliche Tiefen von der Oberseite der Grundschiene 1 auf. Hierdurch sind die ersten Verbindungselemente 7a und die zweiten Verbindungselemente 7b auf derselben Höhe angeordnet, wenn die ersten Verbindungselemente 7a in der zweiten Aufnahmeöffnung 8b angeordnet sind, wie in der Fig. 2 gezeigt. Sind die ersten Verbindungselemente 7a in der ersten Aufnahmeöffnung 8a angeordnet, liegen die ersten Verbindungselemente 7a höher als die zweiten Verbindungselemente 7b. Hierdurch ist in der Konfiguration gemäß der Fig. 1 die Haltevorrichtung gegenüber einer horizontalen Ausrichtung des mittleren Abschnitts, welche sich in der Konfiguration gemäß der Fig. 2 einstellt, abgewinkelt. Hiermit ist ein unterschiedlicher Winkel gegenüber der Horizontalen der Auflagefläche 11a in den unterschiedlichen Konfigurationen erreicht. In der beispielhaften Konfiguration der Fig. 1 beträgt ein Winkel der Auflagefläche 11a gegenüber der Horizontalen, und somit der Winkel gegenüber der Horizontalen, in dem ein Solarmodul auf der Auflagefläche 11a flächig angeordnet wird, 15 Grad. Gemäß dem Ausführungsbeispiel der Fig. 2 beträgt der Winkel der Auflagefläche 11a gegenüber der Horizontalen, und somit der Auflagewinkel eines Solarmoduls, 10 Grad.

Der auf der Gelenkachse A angeordnete zylindrische Stift 5 sowie die entlang des Verlaufs der Grundschiene 1 vor und hinter den Gelenkpunkten 6a, 6b angeordneten zylindrischen Stifte 5 sind in hierfür eingerichteten Öffnungen der Haltevorrichtung 10 angeordnet. Hierdurch kann mit einer Sicherung der entlang des Verlaufs der Grundschiene 1 vor und hinter den Gelenkpunkten 6a, 6b angeordneten zylindrischen Stifte 5 in den entsprechenden Öffnungen der Metallguss-Teile 4 in den verschiedenen Stellungen der Stützenelemente 3a, 3b auch eine Sicherung der Position und Ausrichtung der Haltevorrichtung 10 erreicht sein.

Bei der gezeigten Ausgestaltung ist sind die zweiten Verbindungselemente 7b im Auslieferzustand der Vorrichtung in der weiteren Aufnahmeöffnung 8c ortsfest fixiert vormontiert. Um die Vorrichtung für das Stützen eines Solarmoduls herzurichten, werden die ersten Verbindungselemente 7a in der ersten 8a oder der zweiten 8b Aufnahmeöffnung angeordnet. In der gezeigten Ausführung erfolgt eine Sicherung der vor und hinter den Gelenkpunkten 6a, 6b angeordneten zylindrischen Stifte 5 in den entsprechenden Öffnungen der Metallguss-Teile 4 erst nach der Anordnung der ersten Verbindungselemente 7a in der ersten 8a oder der zweiten 8b Aufnahmeöffnung, da beim Anordnen der ersten Verbindungselemente 7a in der ersten 8a oder der zweiten 8b Aufnahmeöffnung die Stützenelemente 3a, 3b zueinander beweglich sein müssen.

In der Fig. 1 ist entlang des Verlaufs der Grundschiene 1 hinter der Grundschiene 1 eine Sicherungsschiene 12 gezeigt. Die Sicherungsschiene 12 ist mit einer Verbindungsschiene gebildet, welche zur Verbindung mehrerer Anordnungen hintereinander eingerichtet ist. Die Sicherungsschiene 12 ist mit einem Profil gebildet, welches an die äußere Form der Grundschiene 1 derart angepasst ist, dass die Sicherungsschiene 12 die Grundschiene 1 von unten umgreift, wobei sie die Seitenwände 9a, 9b der Grundschiene 1 teilweise bedeckt. Hierzu wird die Sicherungsschiene 12 auf die Grundschiene 1 aufgeschoben. Dies ist in der Fig. 2 gezeigt.

Beim Aufschieben auf die Grundschiene 1 überdeckt und verschließt die Sicherungsschiene 12 die erste 8a und zweite 8b Aufnahmeöffnungen teilweise. Hierbei ist eine erste Position (nicht dargestellt) der Sicherungsschiene 12 definiert, in welcher die Sicherungsschiene teilweise auf die Grundschiene 1 aufgeschoben ist, die erste 8a und zweite 8b Aufnahmeöffnung noch nicht überdeckt und verschließt. In einer in der Fig. 2 gezeigten zweiten Position der Sicherungsschiene 12 ist diese so weit auf die Grundschiene 1 aufgeschoben, dass sie die erste 8a und die zweite 8b Aufnahmeöffnung teilweise überdeckt und verschließt. Hierdurch sind die ersten Verbindungselemente 7a daran gehindert, sich aus der Aufnahmeöffnung 8a, 8b, in welcher sie angeordnet sind (in der Ausführung der Fig. 2 also aus der zweiten Aufnahmeöffnung 8b) herauszubewegen. Hierdurch ist eine Sicherung der oberen Stütze, insbesondere des erste Stützenelements 3a, in einer gewünschten Position erreicht.

An der Innenseite der Sicherungsschiene 12 sind jeweilige Vorsprünge gebildet, so dass die Sicherungsschiene 12 die Verbindungselemente 7a sowohl in der höheren Anordnung in der ersten Aufnahmeöffnung 8a als auch in der tieferen Anordnung in der zweiten Aufnahmeöffnung 8b umgreifen und sichern kann.

Die Sicherungsschiene 12 kann in der zweiten Position verriegelt werden. Beispielsweise können Rastelemente zwischen der Grundschiene 1 und der Sicherungsschiene 12 vorgesehen sein, an welchen die Sicherungsschiene 12 rastend in der zweiten Position gesichert wird. Beispielsweise können die ersten 7a und / oder die zweiten 7b Verbindungselemente mit federnden Stiftelementen gebildet sein, welche zur Sicherung in entsprechende Aussparungen auf der Innenseite der Sicherungsschiene 12 eingreifen. Alternativ kann die Sicherungsschiene 12 beispielsweise mittels einzusetzenden Stiften, Schrauben, Kleben oder Schweißen an der Grundschiene 1 in der zweiten Position gesichert werden.

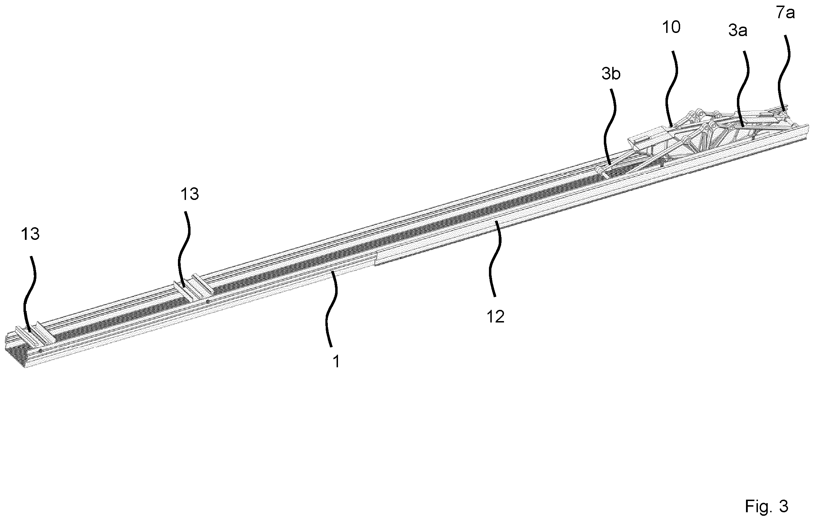

Die Fig. 3 zeigt eine Anordnung für ein Haltesystem für Solarmodule in einer Transportkonfiguration. Hierbei sind die ersten Verbindungselemente 7a vollständig nach hinten bewegt, wodurch das erste Stützenelement 3a zu dem zweiten Stützenelement 3b derart angeordnet ist, dass die obere Stütze 2 vollständig kollabiert ist. Hierbei sind die Stützenelemente 3a, 3b im Wesentlichen innerhalb der Grundschiene 1 angeordnet. Die Stützenelemente 3a, 3b sowie die Haltevorrichtung 10 ragen zwar noch nach oben über das Profil der Grundschiene hinaus. Dennoch ist ein deutlich kompakterer Aufbau erreicht, wodurch ein Transport der Anordnung in der Transportkonfiguration erleichtert sein kann. Die die Sicherungsschiene 12 bildende Verbindungsschiene ist in der Transportkonfiguration nahezu vollständig über der Grundschiene 1 angeordnet. Hierbei sind die ersten Verbindungselemente 7a außerhalb, nämlich hinter, der Grundschiene 1 angeordnet und werden von einem über die Grundschiene 1 überstehenden Abschnitt der Sicherungsschiene 12 umgriffen. Hierdurch sind die Verbindungselemente 7a und somit die obere Stütze 2 in der Transportkonfiguration gesichert. An der Grundschiene 1 sind zusätzlich untere Stützen 13 angeordnet, welche jeweils für das Halten eines unteren Endes eines Solarmoduls eingerichtet sind.

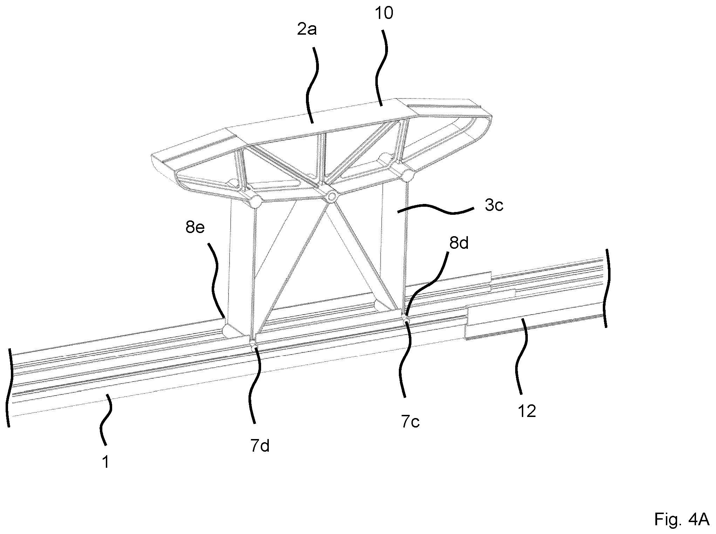

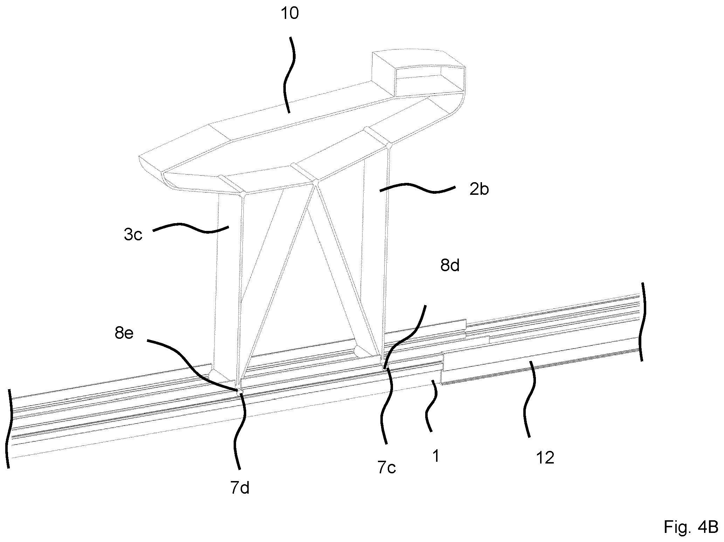

Die Fig. 4A und 4B zeigen Vorrichtungen zum Stützen von Solarmodulen, bei denen eine Sicherungsschiene 12 für die Sicherung von oberen Stützen zum Einsatz kommt, welche nicht höhenverstellbar sind. Gemäß der Darstellung der Fig. 4A ist eine obere Stütze 2a mit einer ersten Höhe an einer Grundschiene 1 angeordnet. Hierfür weist die Grundschiene 1 zwei Aufnahmeöffnungen 8d, 8e auf. Die obere Stütze 2a ist mit einer Stützenstruktur 3c gebildet welche an ihrem unteren Ende entlang der Erstreckungsrichtung der Grundschiene 1 vorne und hinten Verbindungselemente 7c, 7d aufweist. Welche in den Aufnahmeöffnungen 8d, 8e angeordnet sind. Hierzu sind Aufnahmeöffnungen 8d, 8e der Grundschiene 1 nach oben geöffnet. Eine Sicherungsschiene 12 kann auf die Grundschiene 1 aufgeschoben werden, so dass sie die Aufnahmeöffnungen 8d, 8e teilweise überdeckt und verschließt und so die Verbindungselemente 7c, 7d und folglich die obere Stütze 2a - analog zu den Ausführungen mit Bezug zu den Ausführungen der Fig. 1 und 2 - sichert. Im Vergleich zu der Fig. 4A ist in der Ausführung gemäß der Fig. 4B eine obere Stütze 2b an der Grundschiene 1 angeordnet, welche höher ist als die obere Stütze 2a gemäß der Ausführung der Fig. 4A.

Mit der Sicherungsscheine 12 kann somit bei der Montage der jeweiligen Vorrichtung gemäß den Fig. 4A und 4B die jeweilige obere Stütze 2a, 2b an der Grundschiene 1 gesichert werden, in dem die Sicherungsschiene 12 in die zweite Position bewegt wird. Zudem ist ein Austausch von oberen Stützen ermöglicht, indem die Sicherungsschiene 12 in die erste Position bewegt wird, die an der Grundschiene 1 angeordnete obere Stütze entfernt, die gewünschte obere Stütze an der Grundschiene 1 angeordnet und die Sicherungsschiene 12 in die zweite Position bewegt wird.

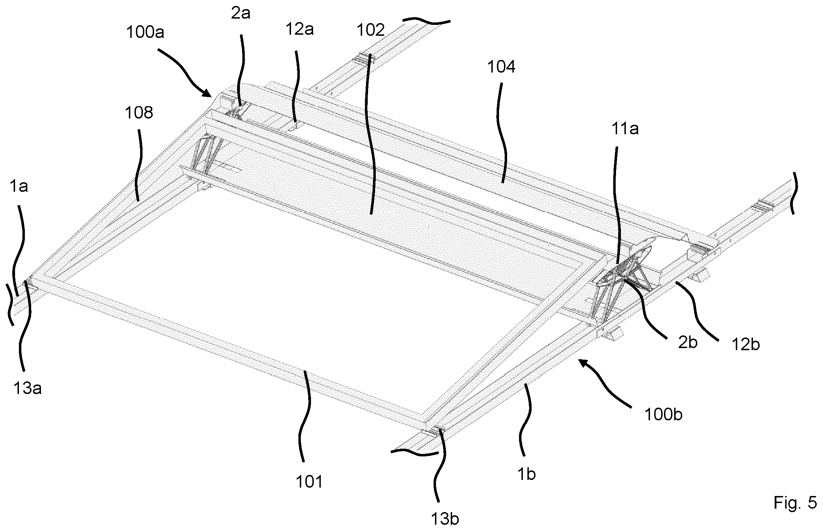

Die Fig. 5 zeigt eine Solarmodul-Anordnung. Die Solarmodul-Anordnung umfasst zwei Vorrichtungen 100a, 100b, die jeweils eine Grundschiene 1a, 1b, eine obere Stütze 2a, 2b, eine untere Stütze 13a, 13b sowie eine als Sicherungsschiene 12a, 12b dienende Verbindungsschiene für das Verbinden der Grundschienen 1a, 1b mit weiteren Grundschienen für die Erweiterung des Haltesystems umfassen.

Die Grundschienen 1a, 1b der Vorrichtungen 100a, 100b sind parallel ausgerichtet und die oberen Stützen 2a, 2b sowie die unteren Stützen 13a, 13b sind jeweils zueinander auf gleicher Höhe entlang den Grundschienen 1a, 1b angeordnet. Ein Solarmodul 101, welches zur besseren Übersicht in der Fig. 5 nur als Rahmen dargestellt ist, liegt an einem oberen Ende auf gegenüberliegenden Seiten auf den Auflageflächen 11a der oberen Stützen 2a, 2b auf und ist von diesen gehalten. An einem unteren Ende liegt das Solarmodul 101 mit den gegenüberliegenden Seiten jeweils auf den unteren Stützen 13a, 13b auf und wird von diesen gehalten. Das Solarmodul 101 ist mittels der Solarmodul-Anordnung also an vier Auflagepunkten gehalten, wobei die Auflagerung im Gegensatz zu einer streckenförmigen Halterung an dem Rahmen des Solarmoduls 101 als punktförmig verstanden werden kann. Es ist somit mit dem in der Fig. 5 gezeigten Haltesystem eine Vier-Punkt-Halterung des Solarmoduls 101 bereitgestellt.

Die oberen Stützen 2a, 2b der Vorrichtungen 100a, 100b sind jeweils mit den ersten Verbindungselementen 7a in den zweiten Aufnahmeöffnungen 8b angeordnet, so dass die oberen Stützen 2a, 2b, dieselbe Höhe über der Grundschiene 1 aufweisen und die Auflageflächen 11a einen Winkel gegenüber der Horizontalen von 10 Grad aufweisen. Das Solarmodul 101 ist in dem Haltesystem somit mit einem Winkel von 10 Grad gegenüber der Horizontalen ausgerichtet.

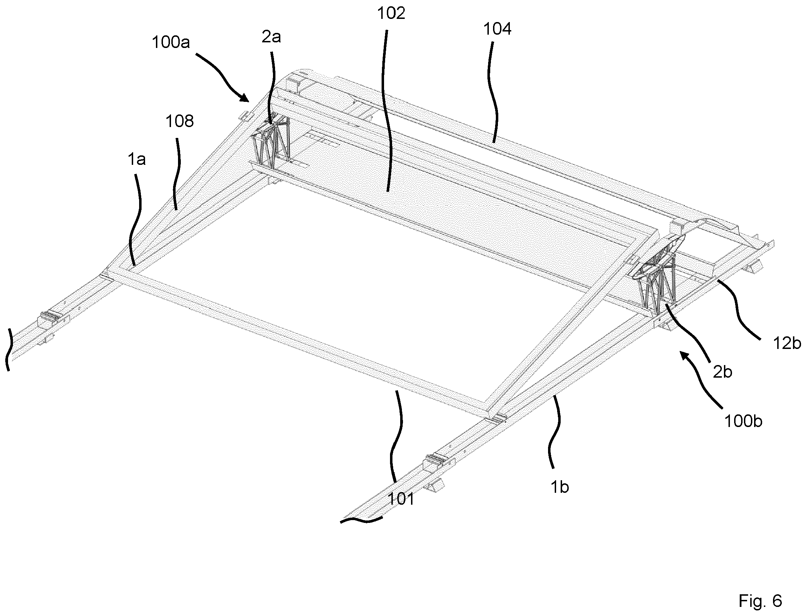

Die Fig. 6 zeigt eine Solarmodul-Anordnung in einer anderen Konfiguration. In der Solarmodul-Anordnung sind die oberen Stützen 2a, 2b jeweils mit den ersten Verbindungselementen 7a in den ersten Aufnahmeöffnungen 8a angeordnet, so dass die oberen Stützen 2a, 2b, dieselbe Höhe über der Grundschiene 1 aufweisen und die Auflageflächen 11a einen Winkel gegenüber der Horizontalen von 15 Grad aufweisen. Das Solarmodul 101 ist in dem Haltesystem gemäß der Fig. 6 somit mit einem Winkel von 15 Grad gegenüber der Horizontalen ausgerichtet.

In alternativen Ausgestaltungen können die Vorrichtungen 100a, 100b, insbesondere die oberen Stützen 2a, 2b, derart ausgestaltet sein, dass andere Winkel des Solarmoduls 101 einstellbar sind. Hierfür können Aufnahmeöffnungen und Stifte 5 sowie Bohrungen in denen diese aufgenommen sind derart ausgestaltet und angeordnet sein, dass sich bei einer entsprechenden Anordnung der ersten Stützenelemente 3a der oberen Stützen 2a, 2b die gewünschten Winkel des Solarmoduls 101 einstellen.

Es kann eine Anordnung mehrerer Solarmodule 101 in einer jeweiligen Anordnung gemäß einer der Fig. 5 oder 6 nebeneinander vorgesehen sein. Hierbei kann vorgesehen sein, dass zwei nebeneinander angeordnete Solarmodule 101 auf derselben Auflagefläche 11a nebeneinander gehalten sind, so dass an derselben oberen Stütze 2a, 2b zwei Solarmodule gehalten sind.

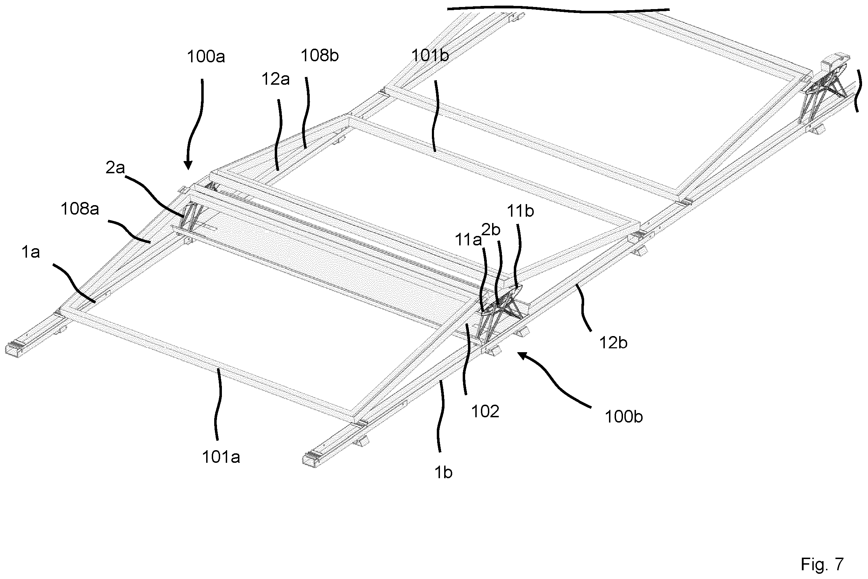

Die Fig. 7 zeigt eine weitere Solarmodul-Anordnung, in der zwei Solarmodule 101a, 101b hintereinander angeordnet sind. Hierbei liegt das erste Solarmodul 101a an einem oberen Ende auf gegenüberliegenden Seiten auf den Auflageflächen 11a der oberen Stützen 2a, 2b auf und ist von diesen gehalten. An seinem unteren Ende liegt das erste Solarmodul 101a mit den gegenüberliegenden Seiten jeweils auf den unteren Stützen 13a, 13b der Vorrichtungen 100a, 100b auf und wird von diesen gehalten. Das zweite Solarmodul 101b liegt an einem oberen Ende auf gegenüberliegenden Seiten auf den Auflageflächen 11b der oberen Stützen 2a, 2b auf und ist von diesen gehalten. An seinem unteren Ende liegt das zweite Solarmodul 101b mit den gegenüberliegenden Seiten jeweils auf unteren weiterer Vorrichtungen auf, welche im Übrigen nicht dargestellt sind, und wird von diesen gehalten. Es kann eine Anordnung mehrerer Paare von Solarmodulen 101a, 101b gemäß der Fig. 7 nebeneinander vorgesehen sein. Hierbei kann vorgesehen sein, dass zwei nebeneinander angeordnete Solarmodule 101a, 101b auf derselben Auflagefläche 11a, 11b nebeneinander gehalten sind, so dass an derselben oberen Stütze 2a, 2b vier Solarmodule gehalten sind.

In der Solarmodul-Anordnung gemäß der Fig. 7 sind die oberen Stützen 2a, 2b jeweils mit den ersten Verbindungselementen 7a in den zweiten Aufnahmeöffnungen 8b angeordnet, so dass die oberen Stützen 2a, 2b, dieselbe Höhe über der Grundschiene 1 aufweisen und die Auflageflächen 11a, 11b jeweils einen Winkel gegenüber der Horizontalen von 10 Grad aufweisen, wobei die Auflageflächen 11a, 11b in entgegengesetzte Richtungen absinkend angeordnet sind. Die Solarmodule 101a, 101b sind in der Solarmodul-Anordnung gemäß der Fig. 7 somit mit jeweils einem Winkel von 10 Grad gegenüber der Horizontalen gegenüberliegend und in entgegengesetzte Richtungen abgesenkt ausgerichtet.

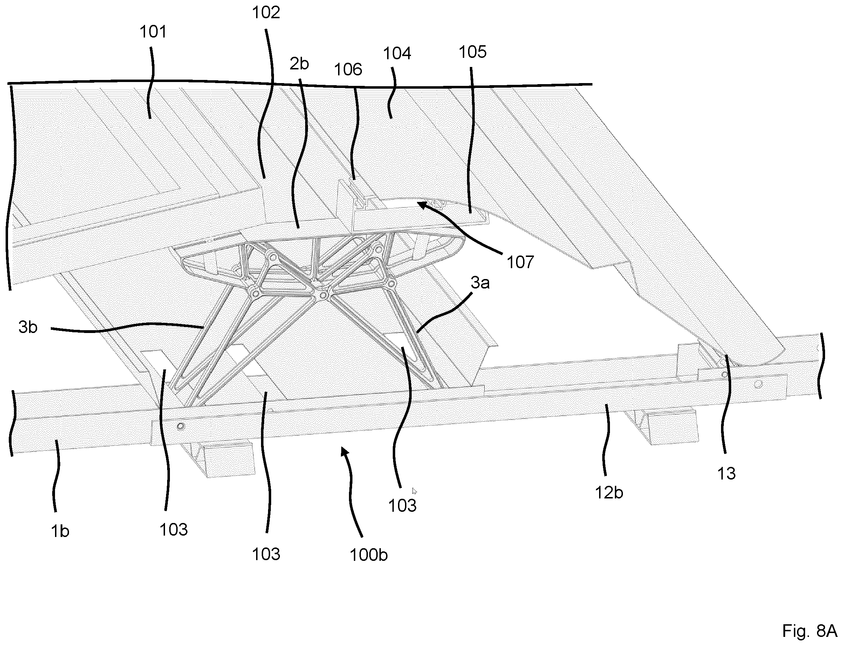

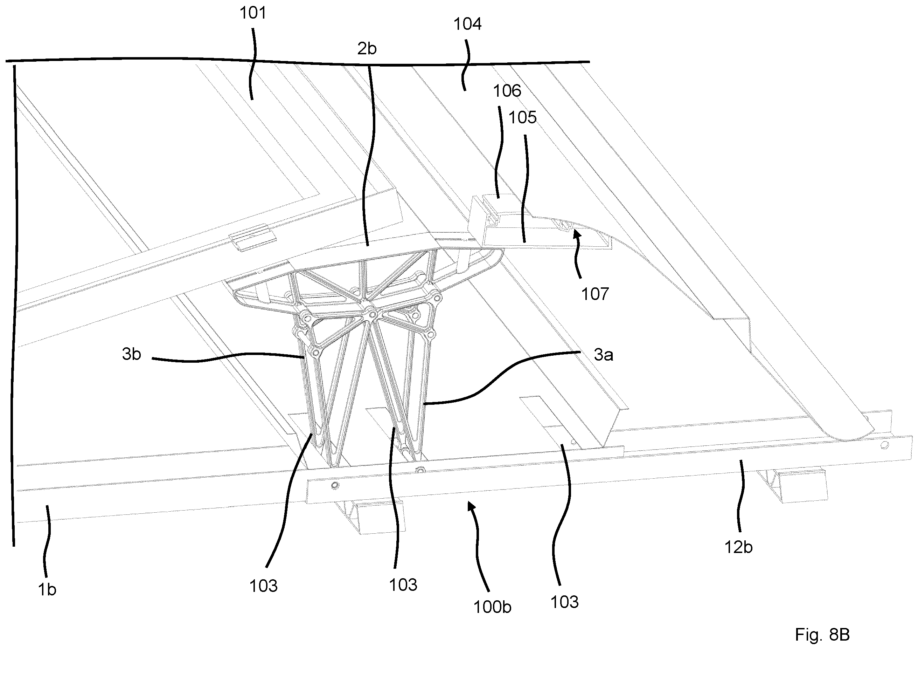

Die in den Fig. 5, 6 und 7 gezeigten Solarmodul-Anordnungen sind für eine Montage von Solarmodulen auf Flachdächern eingerichtet, wobei die offenbarten Haltesysteme auch für andere Anwendungen einsetzbar sind, beispielsweise eine freistehende Montage von Solarmodulen. Bei einer Flachdachmontage ist es in vielen Anwendungsfällen nicht möglich, das Haltesystem mit dem Dach zu verbinden. Aus diesem Grund, und in Ausgestaltungen, in denen eine Verbindung mit dem Flachdach möglich ist zur Erhöhung der Sicherheit, weisen die Haltesysteme der Solarmodul-Anordnungen gemäß den Ausführungen der Fig. 5, 6 und 7 Ballastwannen 102 auf, welche mit Ballast gefüllt werden können, um das Gewicht des Haltesystems zu erhöhen und so eine Bewegung des Haltesystems, beispielsweise durch Windeinwirkung, zu verhindern. Die Ballastwannen liegen an gegenüberliegenden Seiten in Randbereichen auf den Grundschienen 1a, 1b auf. Wie insbesondere in den Detailansichten der Fig. 8A und 8B zu erkennen ist, weisen die Ballastwannen 102 in den Randbereichen Öffnungen 103 auf. Die Öffnungen 103 sind so angeordnet und geformt, dass sie die Stützenelemente 3a, 3b in den verschiedenen Anordnungen der Verbindungselemente 7a, 7b in den Aufnahmeöffnungen 8a, 8b, 8c in den Öffnungen 103 aufgenommen werden. In der Fig. 8A ist dies für eine Konfiguration der Anordnung 100b für 10-Grad-Ausrichtung des Solarmoduls 101 gezeigt. Die Fig. 8B zeigt eine entsprechende Konfiguration für eine 15-Grad-Ausrichtung des Solarmoduls 101.

Durch die Formgebung der Stützenelemente 3a, 3b, insbesondere deren Verbreiterung nach oben und die schräge Ausrichtung der Streben der Metallguss-Teile 4, ist eine Bewegung der Ballastwanne 102 nach oben begrenzt. Ein (vollständiges) Abheben der Ballastwanne 102 von den Grundschienen 1a, 1b ist somit verhindert. Die Ballastwanne 102 ist auf diese Weise an dem Haltesystem gesichert.

Die in den Fig. 5 und 6 gezeigten Solarmodul-Anordnungen weisen zusätzlich jeweils einen hinteren Winddeflektor 104 auf. Der hintere Winddeflektor 104 ist mit einem geformten Blech gebildet und verhindert, dass Wind von hinten unter das jeweilige Solarmodul 101 strömt und dieses nach oben bewegt. Wie in den Detaildarstellungen der Fig. 8A und 8B beispielhaft für verschiedene Konfigurationen der oberen Stütze 2b gezeigt, ist an der Haltevorrichtung 10 der oberen Stütze 2b eine Deflektorhalterung 105 angeordnet. Die Deflektorhalterung 105 weist eine Auflagefläche 106 auf, welche konvex gerundet ausgeformt ist. Der hintere Winddeflektor 104 weist eine Kontaktfläche 107 auf, welche der Form der Auflagefläche 106 angepasst konkav gerundet ausgeformt ist. Hierbei ist die jeweilige Form der Auflagefläche 106 und der Kontaktfläche 107 derart gewählt, dass zwischen einer hohen Konfiguration der oberen Stütze 2b und einer niedrigen Konfiguration der oberen Stütze 2b der hintere Winddeflektor 104 auf der Auflagefläche 106 lediglich verschoben ist. Dies ist insbesondere im Vergleich der Fig. 8A und 8B zu erkennen. Derselbe hintere Winddeflektor 104 ist aufgrund der Formgebung der Kontaktfläche 107 somit in Verbindung mit der Deflektorhalterung 105 für die Verwendung in Haltesystemen bzw. Solarmodul-Anordnungen mit verschiedenen Winkelkonfigurationen von Solarelementen geeignet, beispielsweise sowohl für ein Haltesystem in 10-Grad-Konfiguration, wie beispielhaft in der Fig. 5 gezeigt, als auch für ein Haltesystem in 15-Grad-Konfiguration, wie beispielhaft in der Fig. 6 gezeigt.

Das obere Ende des hinteren Winddeflektors 104 ist an der Deflektorhalterung 105 mittels entsprechender Befestigungsmittel in der gewünschten Stellung fixiert. Beispielsweise kann der auf der Auflagefläche 106 angeordnete hintere Winddeflektor 104 an der Deflektorhalterung 105 angeschraubt oder mittels Klemmelementen fixiert sein. Ein unteres Ende des hinteren Winddeflektors 104 kann mittels einer unteren Stütze 13 gehalten sein. In der Fig. 8A ist beispielhaft gezeigt, dass das untere Ende des Winddeflektors 104 von einer unteren Stütze 13 einer im Übrigen nicht dargestellten hinter der Anordnung 100b angeordneten weiteren Anordnung gehalten wird. Alternativ kann das untere Ende des Winddeflektors 104 auf einem anderen Element aufliegen. In der Fig. 8B ist beispielhaft dargestellt, dass das hintere Ende des Winddeflektors 104 auf der als Sicherungsschiene 12b dienenden Verbindungsschiene der Anordnung 100b aufliegt.

Zusätzlich oder als Alternative zu einem hinteren Winddeflektor 104 können seitliche Winddeflektoren 108 vorgesehen sein, um zu verhindern, dass Wind von der Seite unter das jeweilige Solarmodul 101 strömt und dieses nach oben bewegt. In den Fig. 5 und 6 ist ein solcher seitlicher Winddeflektor 108 in Form eines Blechs an der jeweiligen Anordnung 100a gezeigt. Gemäß der Ausführung der Fig. 7 sind zwei seitliche Winddeflektoren 108a, 108b an der Anordnung 100a vorgesehen, welche zusammen die gesamte Seite des Haltesystems gegen Wind abschirmen. Zur besseren Übersicht sind in den Fig. 5, 6 und 7 an der jeweiligen Anordnung 100b keine seitlichen Winddeflektoren 108 dargestellt. Entsprechende seitliche Winddeflektoren 108 können jedoch auch für die Anordnungen 100b gemäß den Ausführungen der Fig. 5, 6 und 7 vorgesehen sein.

Alternativ oder ergänzend kann auf die Vorderseite ein vorderer Winddeflektor (nicht dargestellt) vorgesehen sein.

Die Grundschienen 1, 1a, 1b und / oder Sicherungsschienen 12, 12a, 12b können in den verschiedenen Ausführungen als Kabelführungen ausgebildet sein, um Versorgungskabel für Solarmodule 101, 101a, 101b aufzunehmen und zu führen. Hierbei sind die in den Grundschienen 1, 1a, 1b und / oder den Sicherungsschienen 12, 12a, 12b angeordneten Kabel mittels derartiger Kabelführung vor Beschädigung von außen geschützt. Beispielhaft ist eine entsprechende Führung von Kabeln in der Grundschiene 1b und der Sicherungsschiene 12b in der Fig. 6 gezeigt.

Alternativ oder ergänzend kann eine Kabelführung an den Stützenelementen 3a, 3b vorgesehen sein.

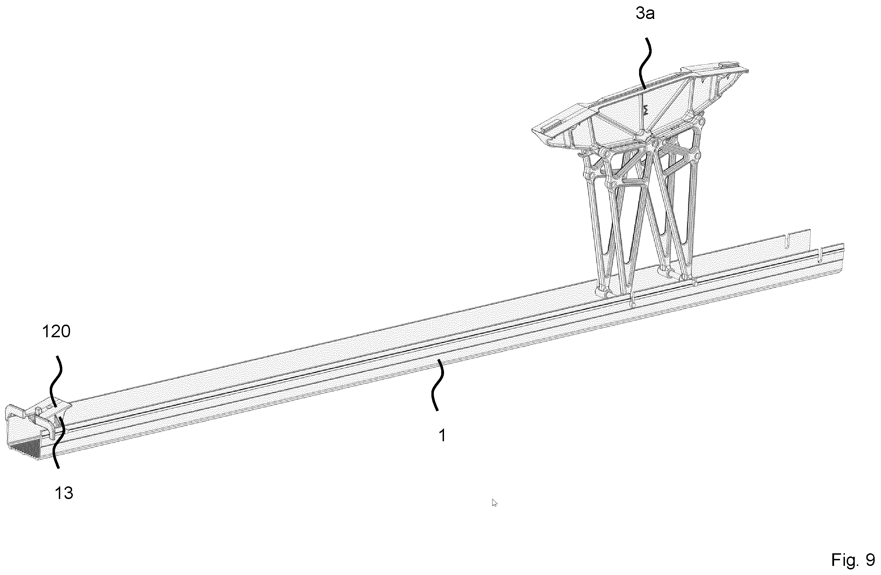

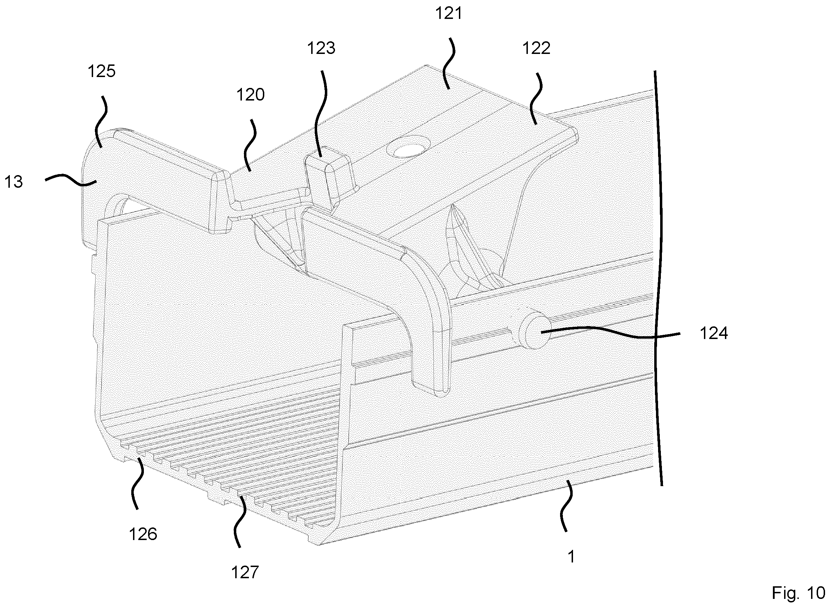

Fig. 9 zeigt eine schematische Darstellung einer Anordnung für eine Vorrichtung zum Stützen eines Solarmoduls mit der Grundschiene 1, an der als Teil der oberen Stütze das Stützelement 3a angeordnet ist. An der Grundschiene 1 ist eine weitere Ausführungsform der unteren Stütze 13 mit einem an der Grundschiene 1 schwenkbar gelagerten Stützbauteil 120 angeordnet. Der Abschnitt der Grundschiene 1 mit dem Stütz- oder Haltebauteil 120 ist in Fig. 10 vergrößert dargestellt. Das Stützbauteil 120 stellt zum Auflegen des Solarmoduls (nicht dargestellt) eine Auflagefläche 121 bereit, wobei nebeneinander gebildeten Auflageflächen 121, 122 ein Distanzzapfen 123 angeordnet ist, mit dem ein Anschlag für die beidseitig anzuordnenden Solarmodule gebildet ist. Das Haltebauteil 120 ist um eine Schwenkachse 124 schwenkbar an der Grundschiene 1 gelagert, die sich quer zur Längsrichtung der Grundschiene 1 erstreckt. In der in den Fig. 9 und 10 dargestellten Stellung umgreifen Haltekrallen 125 die Grundschiene 1 auf gegenüberliegenden Seiten und beabstandet zur Grundschiene 1, so dass in den Abstandsbereich zwischen Grundschiene 1 und Haltekralle 125 die Scherungsschiene 12 (nicht dargestellt) geschoben werden kann. Wird das Haltebauteil 120 um die Schwenkachse 124 geschwenkt, können die Haltekrallen 125 von dem in Fig. 10 gezeigten Eingriff gelöst werden (mittels Schwenken nach oben). Die schwenkbare Lagerung des Haltebauteils 120 ermöglicht so eine stufenlose Anpassung an unterschiedliche Neigungswinkel des Solarmoduls.

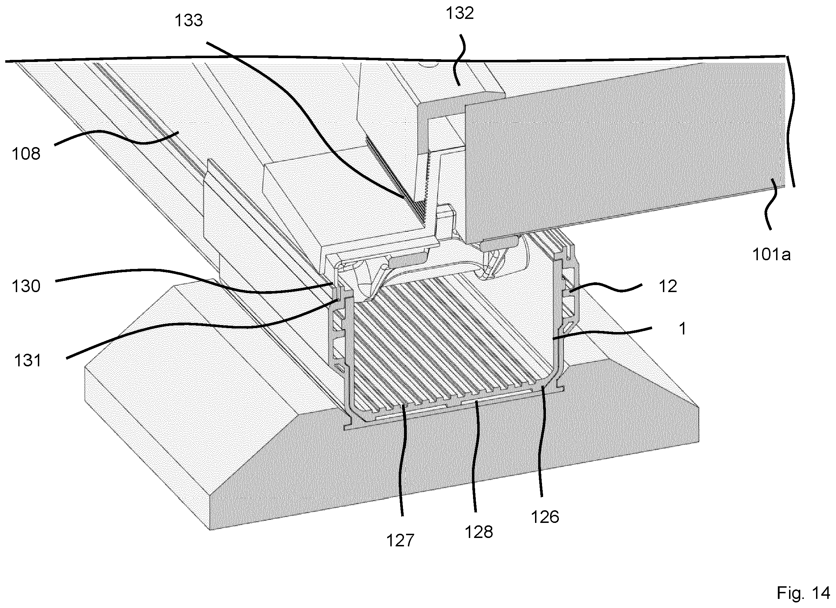

Gemäß der Darstellung in Fig. 10 sind im Bodenbereich 126 Ablaufrillen 127 in Längsrichtung der Grundschiene 1 ausgebildet, die dazu dienen, Wasser abzuleiten, insbesondere Regenwasser (vgl. auch Detaildarstellung in Fig. 14). Sind in die Grundschiene 1 Kabel eingelegt, so ist hierdurch vermieden, dass die Kabel im Wasser liegen. Das so über die Ablaufrillen 127 von der Grundschiene 1 ablaufende Wasser kann dann auf die darunterliegende Sicherungsschiene 12 gelangen und dort Vertiefungen 128, die an der Sicherungsschiene 12 gebildet sind, nach außen abgeführt werden. Mittels der Vertiefungen 128 und dem darüber angeordneten Boden der Sicherungsschiene sind Ablaufkanäle gebildet.

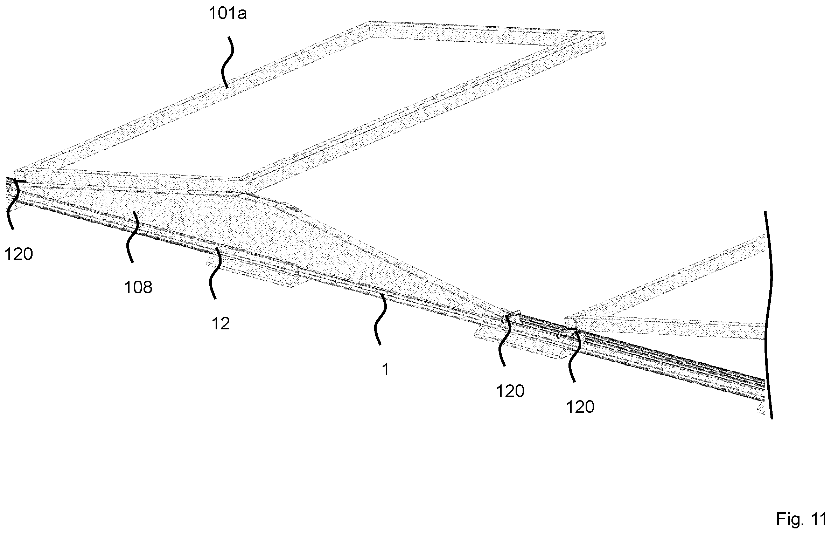

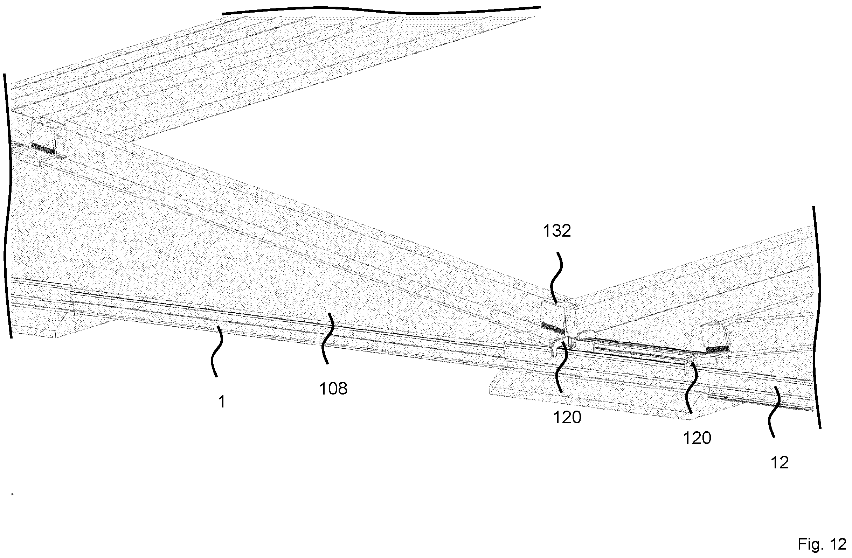

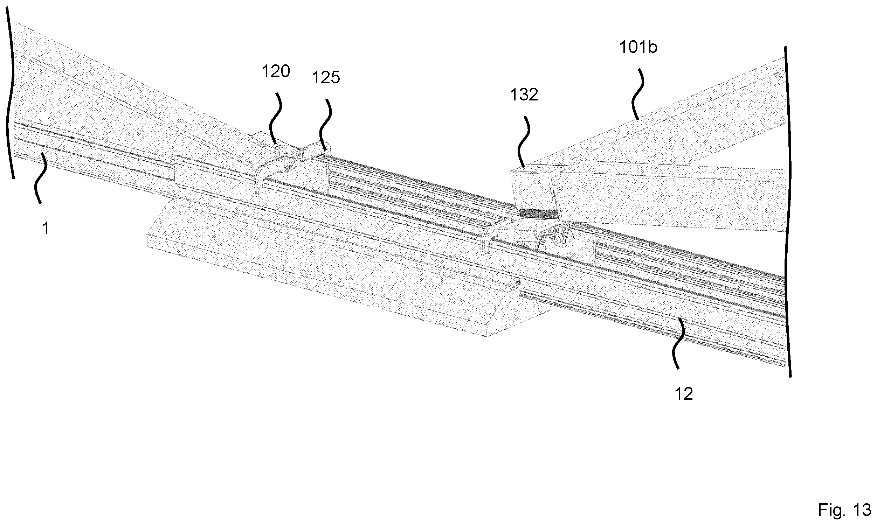

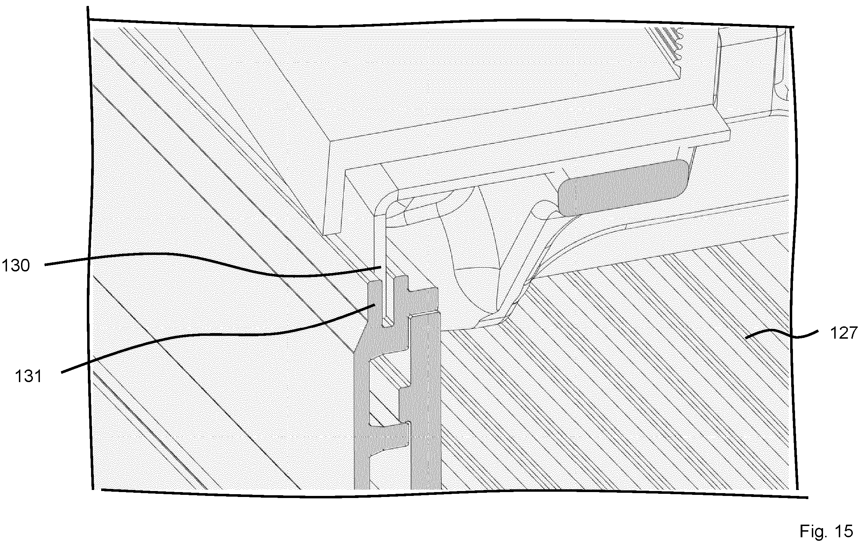

In den Fig. 11 bis 15 ist eine Ausführungsform gezeigt, bei der der seitliche Winddeflektor 108 vorgesehen ist. Gemäß Fig. 14 und 15 ist ein Abschnitt 130 des seitlichen Winddeflektors 108 in einer Vertiefung 131 an der Sicherungsschiene 12 aufgenommen und so in seiner Montageposition gesichert.

Das Solarmodul 101a ist mittels eines Klemmelements 132 an dem Haltebauteil 120 gesichert, wobei in der gezeigten Ausführung als mechanische Sicherung eine Schraubverbindung genutzt wird. Mittels zugeordneter Rastprofile 133 kann das Klemmelement 132 eingestellt werden, wodurch Solarmodule unterschiedlicher Höhe oder Dicke geklemmt werden.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Vorrichtung zum Stützen von Solarmodulen, mit
- einer Grundschiene (1);
- einer an der Grundschiene (1) angeordneten oberen Stütze (2) für das Halten eines oberen Endes eines Solarmoduls (101), aufweisend ein erstes Stützenelement (3a) und ein zweites Stützenelement (3b); und
- einer an der Grundschiene angeordneten unteren Stütze (13) für das Halten eines unteren Endes eines Solarmoduls (101);
wobei
- das erste Stützenelement (3a) und das zweite Stützenelement (3b) an einem Gelenkpunkt schwenkbar miteinander verbunden sind, derart, dass das erste Stützenelement (3a) relativ zu dem zweiten Stützenelement (3b) zwischen einer ersten Stellung und einer zweiten Stellung beweglich ist;
- sich die obere Stütze (2) bis zu einer ersten Höhe über der Grundschiene (1) erstreckt, wenn das erste Stützenelement (3a) in der ersten Stellung angeordnet ist;
- sich die obere Stütze (2) bis zu einer zweiten Höhe über der Grundschiene (1) erstreckt, die von der ersten Höhe verschieden ist, wenn das erste Stützenelement (3a) in der zweiten Stellung angeordnet ist;
**dadurch gekennzeichnet, dass**
- die obere Stütze (2) eine Haltevorrichtung (10) aufweist, welche zum Halten eines jeweiligen Solarmoduls zwei Auflageflächen (11a, 11b) aufweist, auf welche jeweils ein oder mehrere Solarmodule aufgelegt und fixiert werden können, wobei
- die Auflageflächen (11a, 11b) unter einem Winkel zu einem mittleren Abschnitt der Haltevorrichtung (10) angeordnet sind, um ein Solarmodul unter einem Winkel zur Horizontalen zu stützen.

2. Vorrichtung nach Anspruch 1, wobei
- die Grundschiene (1) eine erste Aufnahmeöffnung (8a) und eine zweite AufnahmeÖffnung (8b) aufweist;
- die obere Stütze (2) ein an dem ersten Stützenelement (3a) angeordnetes erstes Verbindungselement (7a) und ein an dem zweiten Stützenelement (3b) angeordnetes zweites Verbindungselement (7b) aufweist;
- das erste Verbindungselement (7a) in der ersten Stellung des ersten Stützelements (3a) in der ersten Aufnahmeöffnung (8a) angeordnet ist; und
- das erste Verbindungselement (7a) in der zweiten Stellung des ersten Stützelements (3a) in der zweiten Aufnahmeöffnung (8b) angeordnet ist.

3. Vorrichtung nach Anspruch 2, mit einer Sicherungsschiene (12), welche die Grundschiene (1) wenigstens teilweise umgreifend auf der Grundschiene (1) angeordnet und entlang der Grundschiene (1) zwischen einer ersten Stellung und einer zweiten Stellung beweglich ist,
wobei
- die Sicherungsschiene (12) wenigstens eine der ersten Aufnahmeöffnung (8a) und der zweiten Aufnahmeöffnung (8b) in der zweiten Position zumindest teilweise verschließt, derart, dass eine Bewegung des ersten Verbindungselements (7a) aus der ersten Aufnahmeöffnung (8a) und/oder der zweiten Aufnahmeöffnung (8b) heraus verhindert ist; und
- die Sicherungsschiene (12) die erste Aufnahmeöffnung (8a) und die zweite Aufnahmeöffnung (8b) in der ersten Position freigibt, derart, dass eine Bewegung des ersten Verbindungselements (7a) aus der ersten Aufnahmeöffnung (8a) und der zweiten Aufnahmeöffnung (8b) heraus ermöglicht ist.

4. Vorrichtung nach Anspruch 2 oder 3, wobei das zweite Verbindungselement (7b) in einer weiteren Aufnahmeöffnung (8c) der Grundschiene (1) ortsfest angeordnet ist.

5. Vorrichtung nach mindestens einem der vorangehenden Ansprüche, wobei sich die obere Stütze (2) in einer ersten Haltestellung, in der die obere Stütze (2) eingerichtet ist, ein Solarmodul (101) in einem ersten Winkel relativ zu der Grundschiene (1) zu halten, und einer zweiten Haltestellung anordnen lässt, in der die obere Stütze (2) eingerichtet ist, ein Solarmodul (101) in einem zweiten Winkel relativ zu der Grundschiene (1) zu halten, der von dem ersten Winkel verschieden ist.

6. Vorrichtung nach Anspruch 5, wobei die obere Stütze (2) in der ersten Haltestellung angeordnet ist, wenn das erste Stützenelement (3a) in der ersten Stellung angeordnet ist und die obere Stütze (2) in der zweiten Haltestellung angeordnet ist, wenn das erste Stützenelement (3a) in der zweiten Stellung angeordnet ist.

7. Vorrichtung nach mindestens einem der vorangehenden Ansprüche, wobei das erste Stützenelement (3a) in der ersten Stellung und in der zweiten Stellung jeweils gegenüber dem zweiten Stützenelement (3b) fixierbar ist.

8. Vorrichtung nach mindestens einem der vorangehenden Ansprüche, wobei das erste Stützenelement (3a) relativ zu dem zweiten Stützenelement (3b) in eine Transportstellung des ersten Stützelements (3a) beweglich ist und das zweite Stützenelement (3b) relativ zu der Grundschiene (1) in eine Transportstellung des zweiten Stützenelementes (3b) beweglich ist, derart, dass die obere Stütze (2) im Wesentlichen innerhalb der Grundschiene (1) angeordnet ist, wenn das erste Stützenelement (3a) und das zweite Stützenelement (3b) in der jeweiligen Transportstellung angeordnet sind.

9. Vorrichtung nach mindestens einem der vorangehenden Ansprüche, wobei die obere Stütze (2) eine Deflektorhalterung (106) aufweist, welche eingerichtet ist einen Winddeflektor (104) an der oberen Stütze (2) zu halten, derart, dass der Winddeflektor (104) in einem ersten Deflektorwinkel relativ zu der Grundschiene (1) angeordnet ist, wenn das erste Stützenelement (3a) in der ersten Stellung angeordnet ist, und der Winddeflektor (104) in einem zweiten Deflektorwinkel relativ zu der Grundschiene (1) angeordnet ist, wenn das erste Stützenelement (3a) in der zweiten Stellung angeordnet ist.

10. Vorrichtung nach mindestens einem der vorangehenden Ansprüche, wobei die Grundschiene (1) eingerichtet ist, ein Kabel eines Solarmoduls (101) aufzunehmen und zu führen.

11. Vorrichtung nach mindestens einem der vorangehenden Ansprüche, wobei die Grundschiene (1) dafür eingerichtet ist, dass eine Seite einer Ballasthaltevorrichtung (102) auf ihr angeordnet wird, derart, dass die Ballasthaltevorrichtung (102) auf der Grundschiene (1) zumindest abschnittsweise aufliegt und die obere Stütze (2) eingerichtet ist, zumindest abschnittsweise in wenigstens einer Öffnung (103) der Ballasthaltevorrichtung (102) angeordnet zu werden, wenn diese auf der Grundschiene (1) zumindest abschnittsweise aufliegt, wobei die obere Stütze (2) derart geformt ist, dass sie hierbei eine Bewegung der Ballasthaltevorrichtung (102) nach oben im Wesentlichen verhindert.

12. Bausatz für eine Vorrichtung nach mindestens einem der vorangehenden Ansprüche, mit
- einer Grundschiene (1);
- einer oberen Stütze (2) für das Halten eines oberen Endes eines Solarmoduls (101) mit einem ersten Stützenelement (3a) und einem zweiten Stützenelement (3b), wobei
- das erste Stützenelement (3a) und das zweite Stützenelement (3b) an einem Gelenkpunkt schwenkbar miteinander verbunden sind, derart, dass das erste Stützenelement (3a) relativ zu dem zweiten Stützenelement (3b) zwischen einer ersten Stellung und einer zweiten Stellung beweglich ist, und
- die obere Stütze (2) eine Haltevorrichtung (10) aufweist, welche zum Halten eines jeweiligen Solarmoduls zwei Auflageflächen (11a, 11b) aufweist, auf welche jeweils ein oder mehrere Solarmodule aufgelegt und fixiert werden können, wobei die Auflageflächen (11a, 11b) unter einem Winkel zu einem mittleren Abschnitt der Haltevorrichtung (10) angeordnet sind, um ein Solarmodul unter einem Winkel zur Horizontalen zu stützen; und
- einer unteren Stütze (13) für das Halten eines unteren Endes eines Solarmoduls (101),
wobei
- die untere Stütze (13) eingerichtet ist, für das Herstellen einer Vorrichtung zum Stützen von Solarmodulen an der Grundschiene (1) angeordnet zu werden; und
- die obere Stütze (2) eingerichtet ist, für das Herstellen der Vorrichtung zum Stützen von Solarmodulen an der Grundschiene (1) angeordnet zu werden und das erste Stützenelement (3a) eingerichtet ist, hierbei
- in der ersten Stellung angeordnet zu werden, derart, dass sich das obere Stützelement (2) bis zu einer ersten Höhe über der Grundschiene (1) erstreckt; und
- in der zweiten Stellung angeordnet zu werden, derart, dass sich das obere Stützelement (2) bis zu einer zweiten Höhe über der Grundschiene (1) erstreckt, die von der ersten Höhe verschieden ist.

13. Verfahren zum Herstellen einer Vorrichtung nach einem der Ansprüche 1 - 11 zum Stützen von Solarmodulen, mit den Schritten:
- Bereitstellen einer Grundschiene (1);
- Bereitstellen einer unteren Stütze (13) für das Halten eines unteren Endes eines Solarmoduls (101);
- Bereitstellen einer oberen Stütze (2) für das Halten eines oberen Endes eines Solarmoduls (101) mit einem ersten Stützenelement (3a) und einem zweiten Stützenelement (3b), wobei
- das erste Stützenelement (3a) und das zweite Stützenelement (3b) an einem Gelenkpunkt schwenkbar miteinander verbunden sind, derart, dass das erste Stützenelement (3a) relativ zu dem zweiten Stützenelement (3b) zwischen einer ersten Stellung und einer zweiten Stellung beweglich ist, und
- die obere Stütze (2) eine Haltevorrichtung (10) aufweist, welche zum Halten eines jeweiligen Solarmoduls zwei Auflageflächen (11a, 11b) aufweist, auf welche jeweils ein oder mehrere Solarmodule aufgelegt und fixiert werden können, wobei die Auflageflächen (11a, 11b) unter einem Winkel zu einem mittleren Abschnitt der Haltevorrichtung (10) angeordnet sind, um ein Solarmodul unter einem Winkel zur Horizontalen zu stützen;
- Anordnen der unteren Stütze (13) an der Grundschiene (1); und
- Anordnen der oberen Stütze (2) an der Grundschiene (1),
wobei
- das erste Stützenelement (3a) in der ersten Stellung angeordnet wird, derart, dass sich die obere Stütze (2) bis zu einer ersten Höhe über der Grundschiene (1) erstreckt, oder
- das erste Stützenelement (3a) in der zweiten Stellung angeordnet wird, derart, dass sich die obere Stütze (2) bis zu einer zweiten Höhe über der Grundschiene (1) erstreckt, die von der ersten Höhe verschieden ist.

14. Solarmodul-Anordnung, mit
- einer Stützvorrichtung (100a, 100b) gemäß einem der Ansprüche 1 bis 11 und
- einem Solarmodul (101),
wobei
- das Solarmodul (101) auf der Stützvorrichtung (100a. 100b) angeordnet ist und ein oberes Ende des Solarmoduls (101) von der oberen Stütze (2) gestützt wird; und
- das erste Stützenelement (3a) der Stützvorrichtung (100a, 100b) in der ersten Stellung angeordnet ist, wobei das erste Stützenelement (3a) in der ersten Stellung gegenüber der Grundschiene (1) der Stützvorrichtung (100a, 100b) derart angeordnet ist, dass das Solarmodul (101) gegenüber der Grundschiene (1) in einem ersten Neigungswinkel angeordnet ist; oder
- das erste Stützenelement (3a) der Stützvorrichtung (100a, 100b) in der zweiten Stellung angeordnet ist, wobei das erste Stützenelement (3a) in der zweiten Stellung gegenüber der Grundschiene (1) der Stützvorrichtung (100a, 100b) derart angeordnet ist, dass das Solarmodul (101) gegenüber der Grundschiene (1) in einem zweiten Neigungswinkel angeordnet ist, der von dem ersten Neigungswinkel verschieden ist.

## Claims

1. A device for supporting solar modules, comprising
- a base rail (1);
- an upper support (2) arranged on the base rail (1) for holding an upper end of a solar module (101), comprising a first support element (3a) and a second support element (3b); and
- a lower support (13) arranged on the base rail for holding a lower end of a solar module (101);
wherein
- the first support element (3a) and the second support element (3b) are pivotably connected to each other at a hinge point in such a manner that the first support element (3a) is movable relative to the second support element (3b) between a first position and a second position;
- the upper support (2) extends up to a first height above the base rail (1) when the first support element (3a) is arranged in the first position;
- the upper support (2) extends up to a second height above the base rail (1), which is different from the first height, when the first support element (3a) is arranged in the second position;
**characterized in that**
- the upper support (2) comprises a holding device (10) which, for holding a respective solar module, comprises two support surfaces (11a, 11b), onto which, respectively, one or more solar modules can be placed and fixed, wherein
- the support surfaces (11a, 11b) are arranged at an angle to a central section of the holding device (10) in order to support a solar module at an angle to the horizontal.

2. The device according to claim 1, wherein
- the base rail (1) has a first receiving opening (8a) and a second receiving opening (8b);
- the upper support (2) has a first connecting element (7a) arranged on the first support element (3a) and a second connecting element (7b) arranged on the second support element (3b);
- the first connecting element (7a) is arranged in the first receiving opening (8a) when the first support element (3a) is in the first position; and
- the first connecting element (7a) is arranged in the second receiving opening (8b) when the first supporting element (3a) is in the second position.

3. The device according to claim 2, comprising a securing rail (12) which is arranged on the base rail (1) so as to at least partially encompass the base rail (1), and is movable along the base rail (1) between a first position and a second position,
wherein
- the securing rail (12) at least partially closes at least one of the first receiving opening (8a) and the second receiving opening (8b) in the second position in such a manner that a movement of the first connecting element (7a) out of the first receiving opening (8a) and/or the second receiving opening (8b) is prevented; and
- the securing rail (12) unblocks the first receiving opening (8a) and the second receiving opening (8b) in the first position in such a manner that a movement of the first connecting element (7a) out of the first receiving opening (8a) and the second receiving opening (8b) is made possible.

4. The device according to claim 2 or 3, wherein the second connecting element (7b) is stationarily arranged in a further receiving opening (8c) of the base rail (1).

5. The device according to at least one of the preceding claims, wherein the upper support (2) can be arranged in a first holding position in which the upper support (2) is configured to hold a solar module (101) at a first angle relative to the base rail (1), and in a second holding position in which the upper support (2) is configured to hold a solar module (101) at a second angle relative to the base rail (1), which is different from the first angle.

6. The device according to claim 5, wherein the upper support (2) is arranged in the first holding position when the first support element (3a) is arranged in the first position, and the upper support (2) is arranged in the second holding position when the first support element (3a) is arranged in the second position.

7. The device according to at least one of the preceding claims, wherein the first support element (3a) is fixable in each of the first position and in the second position with respect to the second support element (3b).

8. The device according to at least one of the preceding claims, wherein the first support element (3a) is movable relative to the second support element (3b) into a transport position of the first support element (3a), and the second support element (3b) is movable relative to the base rail (1) into a transport position of the second support element (3b) in such a manner that the upper support (2) is arranged substantially within the base rail (1) when the first support element (3a) and the second support element (3b) are arranged in the respective transport position.

9. The device according to at least one of the preceding claims, wherein the upper support (2) has a deflector holder (106) which is configured to hold a wind deflector (104) on the upper support (2) in such a manner that the wind deflector (104) is arranged at a first deflector angle relative to the base rail (1) when the first support element (3a) is arranged in the first position, and the wind deflector (104) is arranged at a second deflector angle relative to the base rail (1) when the first support element (3a) is arranged in the second position.

10. The device according to at least one of the preceding claims, wherein the base rail (1) is configured to receive and route a cable of a solar module (101).

11. The device according to at least one of the preceding claims, wherein the base rail (1) is configured to have one side of a ballast holding device (102) arranged thereon in such a manner that the ballast holding device (102) rests at least in sections on the base rail (1), and the upper support (2) is configured to be arranged at least in sections in at least one opening (103) of the ballast holding device (102) when the latter rests at least in sections on the base rail (1), wherein the upper support (2) is shaped in such a manner that in this case, it substantially prevents an upward movement of the ballast holding device (102).

12. A kit for a device according to at least one of the preceding claims, comprising
- a base rail (1);
- an upper support (2) for holding an upper end of a solar module (101), comprising a first support element (3a) and a second support element (3b), wherein
- the first support element (3a) and the second support element (3b) are pivotably connected to one another at a hinge point in such a manner that the first support element (3a) is movable relative to the second support element (3b) between a first position and a second position, and
- the upper support (2) has a holding device (10) which, for holding a respective solar module, has two support surfaces (11a, 11b) onto which, respectively, one or more solar modules can be placed and fixed, wherein the support surfaces (11a, 11b) are arranged at an angle to a central section of the holding device (10) in order to support a solar module at an angle to the horizontal; and
- a lower support (13) for holding a lower end of a solar module (101),
wherein
- the lower support (13) is configured to be arranged on the base rail (1) for manufacturing a device for supporting solar modules; and
- the upper support (2) is configured to be arranged on the base rail (1) for manufacturing the device for supporting solar modules, and the first support element (3a) is configured in this case
- to be arranged in the first position in such a manner that the upper support element (2) extends up to a first height above the base rail (1); and
- to be arranged in the second position in such a manner that the upper support element (2) extends up to a second height above the base rail (1), which is different from the first height.

13. A method for manufacturing a device according to any one of claims 1 - 11 for supporting solar modules, comprising the steps of:
- providing a base rail (1);
- providing a lower support (13) for holding a lower end of a solar module (101);
- providing an upper support (2) for holding an upper end of a solar module (101), having a first support element (3a) and a second support element (3b), wherein
- the first support element (3a) and the second support element (3b) are pivotably connected to one another at a hinge point in such a manner that the first support element (3a) is movable relative to the second support element (3b) between a first position and a second position, and
- the upper support (2) has a holding device (10) which, for holding a respective solar module, has two support surfaces (11a, 11b) onto which, respectively, one or more solar modules can be placed and fixed, wherein the support surfaces (11a, 11b) are arranged at an angle to a central section of the holding device (10) in order to support a solar module at an angle to the horizontal;
- arranging the lower support (13) on the base rail (1); and
- arranging the upper support (2) on the base rail (1),
wherein
- the first support element (3a) is arranged in the first position in such a manner that the upper support (2) extends up to a first height above the base rail (1), or
- the first support element (3a) is arranged in the second position in such a manner that the upper support (2) extends up to a second height above the base rail (1), which is different from the first height.

14. A solar module arrangement, comprising
- a support device (100a, 100b) according to any one of claims 1 to 11, and
- a solar module (101),
wherein
- the solar module (101) is arranged on the support device (100a, 100b), and an upper end of the solar module (101) is supported by the upper support (2); and
- the first support element (3a) of the support device (100a, 100b) is arranged in the first position, wherein the first support element (3a) is arranged in the first position with respect to the base rail (1) of the support device (100a, 100b) in such a manner that the solar module (101) is arranged at a first angle of inclination with respect to the base rail (1); or
- the first support element (3a) of the support device (100a, 100b) is arranged in the second position, wherein the first support element (3a) is arranged in the second position with respect to the base rail (1) of the support device (100a, 100b) in such a manner that, with respect to the base rail (1), the solar module (101) is arranged at a second angle of inclination which is different from the first angle of inclination.

## Revendications

1. Dispositif de support des modules solaires, avec
- un rail de base (1),
- un support supérieur (2) disposé sur le rail de base (1) pour le maintien d'une extrémité supérieure d'un module solaire (101), comportant un premier élément de support (3a) et un deuxième élément de support (3b), et
- un support inférieur (13) disposé sur le rail de base pour le maintien d'une extrémité inférieure d'un module solaire (101),
sachant que
- le premier élément de support (3a) et le deuxième élément de support (3b) sont reliés entre eux pouvant pivoter sur un point d'articulation de telle manière que le premier élément de support (3a) est mobile par rapport au deuxième élément de support (3b) entre une première position et une deuxième position,
- le support supérieur (2) s'étend jusqu'à une première hauteur au-dessus du rail de base (1), lorsque le premier élément de support (3a) est disposé dans la première position,
- le support supérieur (2) s'étend jusqu'à une deuxième hauteur au-dessus du rail de base (1), qui est différente de la première hauteur, lorsque le premier élément de support (3a) est disposé dans la deuxième position,
**caractérisé en ce que**
- le support supérieur (2) comporte un dispositif de maintien (10), lequel comporte deux surfaces d'appui (11a, 11b) pour maintenir un module solaire respectif sur lesquelles peuvent être posés et fixés respectivement un ou plusieurs modules solaires, sachant que
- les surfaces d'appui (11a, 11b) sont disposées sous un angle par rapport à une section centrale du dispositif de maintien (10) pour supporter un module solaire sous un angle par rapport à l'horizontale.

2. Dispositif selon la revendication 1, sachant que
- le rail de base (1) comporte une première ouverture de logement (8a) et une deuxième ouverture de logement (8b),
- le support supérieur (2) comporte un premier élément de liaison (7a) disposé sur le premier élément de support (3a) et un deuxième élément de liaison (7b) disposé sur le deuxième élément de support (3b),
- le premier élément de liaison (7a) dans la première position du premier élément de support (3a) est disposé dans la première ouverture de logement (8a), et
- le premier élément de liaison (7a) dans la deuxième position du premier élément de support (3a) est disposé dans la deuxième ouverture de logement (8b).

3. Dispositif selon la revendication 2, avec un rail de fixation (12), lequel est disposé sur le rail de base (1) enveloppant au moins en partie le rail de base (1) et est mobile le long du rail de base (1) entre une première position et une deuxième position,
sachant que
- le rail de fixation (12) ferme, au moins en partie, au moins une de la première ouverture de logement (8a) et de la deuxième ouverture de logement (8b) dans la deuxième position de telle manière qu'un mouvement du premier élément de liaison (7a) hors de la première ouverture de logement (8a) et/ou de la deuxième ouverture de logement (8b) est évité, et
- le rail de fixation (12) libère la première ouverture de logement (8a) et la deuxième ouverture de logement (8b) dans de la première position de telle manière qu'un mouvement du premier élément de liaison (7a) hors de la première ouverture de logement (8a) et de la deuxième ouverture de logement (8b) est rendu possible.

4. Dispositif selon la revendication 2 ou 3, sachant que le deuxième élément de liaison (7b) est disposé fixement dans une autre ouverture de logement (8c) du rail de base (1).

5. Dispositif selon l'une quelconque des revendications précédentes, sachant que le support supérieur (2) dans une première position de maintien, dans laquelle est agencé le support supérieur (2), permet de maintenir un module solaire (101) dans un premier angle par rapport au rail de base (1) et de le disposer dans une deuxième position de maintien dans laquelle le support supérieur (2) est agencé pour maintenir un module solaire (101) dans un deuxième angle par rapport au rail de base (1), qui est différent du premier angle.

6. Dispositif selon la revendication 5, sachant que le support supérieur (2) est disposé dans la première position de maintien, lorsque le premier élément de support (3a) est disposé dans la première position et le support supérieur (2) est disposé dans la deuxième position de maintien, lorsque le premier élément de support (3a) est disposé dans la deuxième position.

7. Dispositif selon au moins l'une quelconque des revendications précédentes, sachant que le premier élément de support (3a) peut être fixé respectivement dans la première position et dans la deuxième position par rapport au deuxième élément de support (3b).

8. Dispositif selon au moins l'une quelconque des revendications précédentes, sachant que le premier élément de support (3a) est mobile par rapport au deuxième élément de support (3b) dans une position de transport du premier élément de support (3a) et le deuxième élément de support (3b) est mobile par rapport au rail de base (1) dans une position de transport du deuxième élément de support (3b) de telle manière que le support supérieur (2) est disposé pour l'essentiel à l'intérieur du rail de base (1), lorsque le premier élément de support (3a) et le deuxième élément de support (3b) sont disposés dans la position de transport respective.

9. Dispositif selon au moins l'une quelconque des revendications précédentes, sachant que le support supérieur (2) comporte une fixation de déflecteur (106), laquelle est agencée pour maintenir un déflecteur de vent (104) sur le support supérieur (2) de telle manière que le déflecteur de vent (104) est disposé dans un premier angle de déflecteur par rapport au rail de base (1), lorsque le premier élément de support (3a) est disposé dans la première position et le déflecteur de vent (104) est disposé dans un deuxième angle de déflecteur par rapport au rail de base (1), lorsque le premier élément de support (3a) est disposé dans la deuxième position.

10. Dispositif selon au moins l'une quelconque des revendications précédentes, sachant que le rail de base (1) est agencé pour loger et guider un câble d'un module solaire (101).

11. Dispositif selon au moins l'une quelconque des revendications précédentes, sachant que le rail de base (1) est agencé, pour qu'un côté d'un dispositif de maintien de ballast (102) soit disposé sur lui de telle manière que le dispositif de maintien de ballast (102) repose au moins par endroits sur le rail de base (1) et le support supérieur (2) est agencé pour être disposé au moins par endroits dans au moins une ouverture (103) du dispositif de maintien de ballast (102), lorsque celui-ci repose au moins par endroits sur le rail de base (1), sachant que le support supérieur (2) est formé de telle manière qu'il évite pour l'essentiel à cet effet un mouvement du dispositif de maintien de ballast (102) vers le haut.

12. Composant destiné à un dispositif selon au moins l'une quelconque des revendications précédentes, avec
- un rail de base (1),
- un support supérieur (2) pour le maintien d'une extrémité supérieure d'un module solaire (101) avec un premier élément de support (3a) et un deuxième élément de support (3b), sachant que
- le premier élément de support (3a) et le deuxième élément de support (3b) sont reliés entre eux pouvant pivoter sur un point d'articulation de telle manière que le premier élément de support (3a) est mobile par rapport au deuxième élément de support (3b) entre une première position et une deuxième position, et
- le support supérieur (2) comporte un dispositif de maintien (10), lequel comporte deux surfaces d'appui (11a, 11b) pour la maintien d'un module solaire respectif sur lesquelles peuvent être posés et fixés respectivement un ou plusieurs modules solaires, sachant que les surfaces d'appui (11a, 11b) sont disposées sous un angle par rapport à une section centrale du dispositif de maintien (10) pour supporter un module solaire sous un angle par rapport à l'horizontale, et
- un support inférieur (13) pour le maintien d'une extrémité inférieure d'un module solaire (101),
sachant que
- le support inférieur (13) est agencé pour la réalisation d'un dispositif de support de modules solaires pouvant être disposés sur le rail de base (1), et
- le support supérieur (2) est agencé pour la réalisation du dispositif de support des modules solaires pouvant être disposés sur le rail de base (1) et le premier élément de support (3a) est agencé à cet effet,
- pour être disposé dans la première position de telle manière que l'élément de support supérieur (2) s'étend jusqu'à une première hauteur au-dessus du rail de base (1), et
- pour être disposé dans la deuxième position de telle manière que le support supérieur (2) s'étend jusqu'à une deuxième hauteur au-dessus du rail de base (1), qui est différente de la première hauteur.

13. Procédé destiné à la fabrication d'un dispositif selon l'une quelconque des revendications 1 - 11 pour supporter des modules solaires avec les étapes de :
- mise à disposition d'un rail de base (1),
- mise à disposition d'un support inférieur (13) pour le maintien d'une extrémité inférieure d'un module solaire (101),
- mise à disposition d'un support supérieur (2) pour le maintien d'une extrémité supérieure d'un module solaire (101) avec un premier élément de support (3a) et un deuxième élément de support (3b), sachant que
- le premier élément de support (3a) et le deuxième élément de support (3b) sont reliés entre eux pouvant pivoter sur un point d'articulation de telle manière que le premier élément de support (3a) peut être mobile par rapport au deuxième élément de support (3b) entre une première position et une deuxième position, et
- le support supérieur (2) comporte un dispositif de maintien (10) lequel comporte deux surfaces d'appui (11a, 11b) pour le maintien d'un module solaire respectif sur lesquelles peuvent être posés et fixés respectivement un ou plusieurs modules solaires, sachant que les surfaces d'appui (11a, 11b) sont disposées sous un angle par rapport à une section centrale du dispositif de maintien (10) pour supporter un module solaire sous un angle par rapport à l'horizontale,
- mise en place du support inférieur (13) sur le rail de base (1), et
- mise en place du support supérieur (2) sur le rail de base (1),
sachant que
- le premier élément de support (3a) est disposé dans la première position de telle manière que le support supérieur (2) s'étend jusqu'à une première hauteur au-dessus du rail de base (1), ou
- le premier élément de support (3a) est disposé sans la deuxième position de telle manière que le support supérieur (2) s'étend jusqu'à une deuxième hauteur au-dessus du rail de base (1), qui est différente de la première hauteur.

14. Agencement de module solaire, avec
- un dispositif de support (100a, 100b) selon l'une quelconque des revendications 1 à 11, et
- un module solaire (101)
sachant que
- le module solaire (101) est disposé sur le dispositif de support (100a, 100b) et une extrémité supérieure du module solaire (101) est supportée par le support supérieur (2), et
- le premier élément de support (3a) du dispositif de support (100a, 100b) est disposé dans la première position, sachant que le premier élément de support (3a) est disposé dans la première position par rapport au rail de base (1) du dispositif de support (100a, 100b) de telle manière que le module solaire (101) est disposé par rapport au rail de base (1) dans un premier angle d'inclinaison, ou
- le premier élément de support (3a) du dispositif de support (100a, 100b) est disposé dans la deuxième position, sachant que le premier élément de support (3a) est disposé dans la deuxième position par rapport au rail de base (1) du dispositif de support (100a, 100b), de telle manière que le module solaire (101) est disposé par rapport au rail de base (1) dans un deuxième angle d'inclinaison, qui est différent du premier angle d'inclinaison.
